# EUROPÄISCHE PATENTANMELDUNG

(11) **EP 4 336 072 A1**
(43) Veröffentlichungstag der Anmeldung: **13.03.2024**
(21) Anmeldenummer: 23195216.9
(22) Anmeldetag: 04.09.2023
(51) Int. Cl.: F16K 1/32, F16K 29/00

(54) **VERFAHREN ZUM POSITIONIEREN EINES VERSCHLUSSELEMENTS EINES VENTILS ODER EJEKTORS, SOWIE VENTIL ODER EJEKTOR**

(30) Priorität: 12.09.2022 DE 102022123222; 07.10.2022 DE 102022125928
(71) Anmelder: Wurm GmbH & Co. KG Elektronische Systeme, 42857 Remscheid (DE); Armaturenwerk Altenburg GmbH, 04600 Altenburg (DE)
(72) Erfinder: DREISBACH, Heiko, 42781 Haan (DE); MIKESCH, Lucas, 04626 Schmölln (DE)
(74) Vertreter: Manitz Finsterwald Patent- und Rechtsanwaltspartnerschaft mbB

(57) **Zusammenfassung**

Bei einem Verfahren zum Positionieren eines mittels eines Antriebs zwischen einer ersten Endlage und einer zweiten Endlage bewegbaren Verschlusselements eines Ventils oder Ejektors wird das Verschlusselement in eine von der ersten Endlage und der zweiten Endlage bewegt und nach dem Bewegen des Verschlusselements in die eine Endlage wird ein Kompensationszyklus durchgeführt, während dessen das Verschlusselement zum Ausführen einer ersten Kompensationsbewegung in Richtung der anderen Endlage und zum Ausführen einer zweiten Kompensationsbewegung in Richtung der einen Endlage angesteuert wird.

## Beschreibung

Die Erfindung betrifft ein Verfahren zum Positionieren eines mittels eines Antriebs zwischen einer ersten Endlage und einer zweiten Endlage bewegbaren Verschlusselements eines Ventils oder Ejektors, wobei das Verschlusselement eine Durchflussöffnung des Ventils oder Ejektors in der ersten Endlage gegen einen Durchfluss von Fluid oder Gas blockiert und die Durchflussöffnung in der zweiten Endlage für einen Durchfluss von Fluid oder Gas freigibt.

Ferner betrifft die Erfindung ein Ventil oder einen Ejektor.

Beispielsweise kann ein Ventil dazu vorgesehen sein, einen Fluid- oder Gasfluss zu regulieren. Dazu kann das Ventil zumindest einen Eingang und zumindest einen Ausgang aufweisen, wobei Gas oder Fluid durch eine Durchflussöffnung des Eingangs in das Ventil einströmen und durch eine Durchflussöffnung des Ausgangs ausströmen kann, wenn beide Durchflussöffnungen geöffnet sind. Um den Durchfluss beschränken oder unterbrechen zu können, kann ein solches Ventil ein Verschlusselement aufweisen, wobei durch Bewegen des Verschlusselements in eine erste Endlage, die auch als Geschlossenstellung bezeichnet werden kann, zumindest eine Durchflussöffnung, beispielsweise die Durchflussöffnung des Eingangs, verschlossen werden kann, um den Fluss des Gases oder Fluids durch das Ventil zu begrenzen oder zu unterbinden.

Ein Ejektor kann dazu vorgesehen sein, ein durch einen Treibanschluss einströmendes Treibmedium durch eine Treibdüse zu führen und zu beschleunigen, um durch den derart erzeugten Unterdruck ein Saugmedium durch einen Sauganschluss ansaugen und gemeinsam mit dem Treibmedium durch einen Ausgang des Ejektors aus dem Ejektor herausführen zu können. Auch bei einem solchen Ejektor kann ein Verschlusselement beispielsweise dazu vorgesehen sein, die Durchflussöffnung für das einströmende Treibmedium wahlweise zu begrenzen oder zu verschließen, wobei durch ein Blockieren des Eintritts des Treibmediums in den Ejektor auch die Saugwirkung unterbunden und damit ein Austritt von Flüssigkeit oder Gas durch den Ausgang des Ejektors gestoppt werden kann.

Um eine präzise Regulierung eines Fluid- oder Gasflusses durch ein Ventil oder einen Ejektor zu erreichen, ist es somit erforderlich, dass das Verschlusselement die Durchflussöffnung einerseits nach einem Bewegen in die erste Endlage bzw. Geschlossenstellung zuverlässig verschließt und eine ungewollte Leckage verhindert, andererseits wahlweise und zuverlässig zwischen den Endlagen bewegt werden kann, um wahlweise einen Durchfluss durch das Ventil oder den Ejektor zu ermöglichen.

Da jedoch nach einem Bewegen des Verschlusselements in die erste Endlage ein Durchfluss von Gas oder Fluid durch das Ventil oder den Ejektor unterbunden ist, können - etwa durch ein Abkühlen des Ventils oder Ejektors aufgrund eines ausbleibenden Durchflusses eines warmen Mediums oder durch ein Erwärmen des Ventils oder Ejektors aufgrund eines ausbleibenden Durchflusses eines kalten Mediums - thermische Spannungen auftreten, welche sich in Verformungen des Ventils oder Ejektors und insbesondere eines Gehäuses des Ventils oder Ejektors niederschlagen und dadurch eine von dem Verschlusselement ausgeübte Schließkraft beeinflussen können. Insbesondere können unterschiedliche Wärmeausdehnungskoeffizienten der in dem Ventil oder Ejektor verbauten Komponenten zu solchen Spannungen führen, wobei sich zudem beispielsweise nach dem Schließen der Durchflussöffnung auftretende Druckdifferenzen auf die Schließkraft auswirken können.

Insofern kann sich eine durch Bewegen des Verschlusselements in die erste Endlage eingestellte Schließkraft gegebenenfalls ungewollt verändern, ohne dass das Verschlusselement zu einer Bewegung angesteuert wird, wodurch eine präzise Regulierung des Durchflusses und/oder die Bedienbarkeit des Ventils oder Ejektors erschwert werden können. So können beispielsweise aufgrund von thermischen Spannungen auftretende Verkürzungen eines Ventils oder Ejektors dazu führen, dass eine erhöhte Kraft auf das Verschlusselement wirkt und das Verschlusselement verklemmt, so dass dieses nicht mehr in die zweite Endlage bewegt werden kann. Umgekehrt können beispielsweise Ausdehnungen des Ventils oder Ejektors aufgrund sich ändernder thermischer Verhältnisse auftreten, durch welche sich eine von dem Verschlusselement ausgeübte Schließkraft verringern und es gegebenenfalls zu einer ungewollten Leckage kommen kann. Zudem können auch in der zweiten Endlage bzw. einer Offenstellung des Verschlusselements Spannungen auftreten, welche zu einem Verklemmen des Verschlusselements führen, so dass dieses nicht mehr in die erste Endlage oder Geschlossenstellung bewegt werden kann, um die Durchflussöffnung zu verschließen.

Es ist daher eine Aufgabe der Erfindung, ein Verfahren zum Positionieren eines Verschlusselements eines Ventils oder Ejektors und/oder ein Ventil oder einen Ejektor zu schaffen, durch welches oder bei welchem ein zuverlässiges Verschließen oder Öffnen einer Durchflussöffnung des Ventils oder Ejektors, insbesondere auch über längere Zeiträume, sowie ein darauffolgendes zuverlässiges Bewegen des Verschlusselements in eine entgegengesetzte Endlage erreicht werden kann.

Diese Aufgabe wird gelöst durch ein Verfahren mit den Merkmalen des Anspruchs 1.

Bei diesem Verfahren wird das Verschlusselement in eine der Endlagen (erste Endlage oder zweite Endlage) bewegt und es wird nach dem Bewegen des ersten Verschlusselements in die eine Endlage ein Kompensationszyklus durchgeführt, wobei das Verschlusselement während des Kompensationszyklus zum Ausführen einer ersten Kompensationsbewegung in Richtung der anderen Endlage und zum Ausführen einer zweiten Kompensationsbewegung in Richtung der einen Endlage angesteuert wird.

Beispielsweise kann das Verschlusselement zunächst in die erste Endlage, die auch als Geschlossenstellung bezeichnet werden kann, bewegt werden, um die Durchflussöffnung zu verschließen. Die erste Endlage kann insofern die Endlage der Bewegung des Verschlusselements in Richtung der Durchflussöffnung darstellen, welche dadurch definiert sein kann, dass das Verschlusselement die Durchflussöffnung mit einer von dem Antrieb auf das Verschlusselement übertragbaren Kraft verschließt und/oder die von dem Antrieb übertragbare Kraft auf eine Dichtung der Durchflussöffnung ausübt. Das Verschlusselement kann daher zum Bewegen in die erste Endlage bis zu einem Anschlag verfahren werden, bei welchem beispielsweise eine Motorwelle eines elektrischen Motors des Antriebs blockiert und/oder ein elektrischer Schrittmotor des Antriebs bei einer Ansteuerung einer weiteren Bewegung auf die Durchflussöffnung zu einen oder mehrere Schrittverluste erleidet. Umgekehrt kann die zweite Endlage, die auch als Offenstellung bezeichnet werden kann, beispielsweise einer der ersten Endlage entgegengesetzten Endlage der Bewegung des Verschlusselements entsprechen, in welcher die Durchflussöffnung für einen unter Berücksichtigung der Bauart und Dimension des Ventils oder Ejektors maximalen Durchfluss freigegeben ist.

Ferner kann das Verschlusselement in verschiedene Zwischenstellungen bewegbar sein, welche zwischen der ersten Endlage und der zweiten Endlage liegen und einen Durchfluss von Gas- oder Fluid durch die Durchflussöffnung ermöglichen, wobei der Durchfluss durch Bewegen der Verschlusselements in näher an der zweiten Endlage bzw. Offenstellung liegende Zwischenstellungen erhöht und durch Bewegen in näher an der ersten Endlage bzw. Geschlossenstellung liegende Zwischenstellungen verringert werden kann. Die Zwischenstellungen ermöglichen es somit, die Stärke des Durchflusses zwischen einem in der zweiten Endlage erreichten maximalen Durchfluss und einem Blockieren des Durchflusses in der ersten Endlage regulieren zu können.

Während der Durchfluss von Gas oder Fluid in der ersten Endlage zuverlässig blockiert sein kann, kann der Durchfluss bei einigen Ventilen oder Ejektoren ferner bereits durch Bewegen des Verschlusselements in eine Sperrstellung blockierbar sein, in welcher das Verschlusselement die Durchflussöffnung bereits mit einer ausreichenden Kraft verschließt, um einen Durchfluss zu unterbinden, ohne jedoch die von der durch den Antrieb übertragbaren Kraft abhängende erste Endlage bereits erreicht zu haben. Insofern kann ein Durchfluss durch die Durchflussöffnung grundsätzlich durch Positionieren des Verschlusselements in einem Sperrabschnitt blockiert sein, welcher durch die erste Endlage und die Sperrstellung, welche geringfügig gegenüber der ersten Endlage in Richtung der zweiten Endlage versetzt sein kann, begrenzt ist.

Um zu erreichen, dass das Verschlusselement zuverlässig in den Endlagen positioniert, andererseits jedoch bei Bedarf auch wieder aus der jeweiligen Endlage gelöst werden kann, ist bei dem hier beschriebenen Verfahren vorgesehen, dass das Verschlusselement nach dem Bewegen in eine jeweilige Endlage nicht unbewegt in der Endlage verbleibt, sondern ein Kompensationszyklus ausgeführt wird. Während dieses Kompensationszyklus wird das Verschlusselements zum Ausführen einer ersten Kompensationsbewegung in Richtung der jeweiligen anderen Endlage und zum Ausführen einer zweiten Kompensationsbewegung in Richtung der einen Endlage angesteuert, wobei dies insbesondere durch entsprechendes Ansteuern des Antriebs erfolgen kann. Insbesondere kann das Verschlusselement während des Kompensationszyklus die erste Kompensationsbewegung und die zweite Kompensationsbewegung ausführen und in Richtung der anderen Endlage und in Richtung der einen Endlage bewegt werden. Das Durchführen des Kompensationszyklus kann zudem während einer Zeitspanne vorgesehen sein, während derer das Verschlusselement nicht für eine Bewegung in die andere Endlage oder eine der vorstehend erwähnten Zwischenstellungen angesteuert wird, sondern die Durchflussöffnung grundsätzlich in der einen Endlage - der Geschlossenstellung oder der Offenstellung - bleiben soll.

Indem das Verschlusselement nicht unbewegt in der einen Endlage belassen wird, können insbesondere nach dem Erreichen der einen Endlage aufgebaute thermische Spannungen ausgeglichen werden. Beispielsweise kann eine thermische Spannung, die nach einem Bewegen des Verschlusselements in die erste Endlage bzw. Geschlossenstellung zu einer erhöhten Schließkraft führt, ausgeglichen werden, indem das Verschlusselement in Richtung der zweiten Endlage bzw. Offenstellung bewegt wird. Insbesondere kann durch diese Bewegung die von dem Verschlusselement auf die Durchflussöffnung oder eine Dichtung der Durchflussöffnung ausgeübte Kraft reduziert werden, so dass Komponenten des Ventils oder Ejektors, insbesondere ein Gehäuse des Ventils oder Ejektors, der Bewegung des Verschlusselements in Richtung der zweiten Endlage gewissermaßen nachfolgen und eine Verkürzung ausführen können, um die thermischen Spannungen abzubauen. Durch ein Bewegen des Verschlusselements wieder in Richtung der ersten Endlage kann sichergestellt werden, dass die Durchflussöffnung wiederum zuverlässig und beispielsweise mit einer vorgegebenen Schließkraft verschlossen wird. Jedoch kann sich eine absolute Position der ersten Endlage aufgrund der Verkürzung des Ventils oder Ejektors gegebenenfalls verschoben haben, so dass die angesteuerte Bewegung in Richtung der ersten Endlage gegebenenfalls nicht vollständig ausgeführt, sondern die (verschobene) erste Endlage bereits zuvor erreicht wird.

Zudem können durch das erläuterte Vorgehen auch thermisch bedingte Reduzierungen der von dem Verschlusselement ausgeübten Schließkraft ausgeglichen werden, wenn der aufgrund des sich in der ersten Endlage befindlichen Verschlusselements ausbleibende Massestrom zu einer Ausdehnung des Ventils oder Ejektors führt. Dies kann insbesondere der Fall sein, wenn der ausbleibende Durchfluss eines kalten Mediums zu einer Erwärmung des Ventils oder Ejektors führt.

Infolge einer solchen Ausdehnung kann sich die Durchflussöffnung gegebenenfalls geringfügig von dem Verschlusselement entfernen, so dass sich die von dem Verschlusselement ausgeübte Schließkraft reduziert, ohne dass das Verschlusselement für eine Bewegung aus der ersten Endlage bzw. Geschlossenstellung heraus angesteuert wurde. Solche thermischen Veränderungen können jedoch durch das Bewegen des Verschlusselements in Richtung der ersten Endlage während des Kompensationszyklus ausgeglichen werden, indem das Verschlusselement der Ausdehnung des Ventils oder Ejektors gewissermaßen nachgeführt werden kann. Dadurch kann insbesondere eine ungewollte Leckage verhindert werden.

Um zu erreichen, dass sowohl thermisch bedingte Verkürzungen als auch thermisch bedingte Ausdehnungen des Ventils oder Ejektors ausgeglichen werden können, kann insbesondere vorgesehen sein, dass das Verschlusselement zum Bewegen um eine größere Wegstrecke in Richtung der ersten Endlage als in Richtung der zweiten Endlage angesteuert wird, so dass das Verschlusselement im Zuge des Kompensationszyklus einer etwaigen Ausdehnung des Ventils oder Ejektors letztlich nachfolgen und diese Ausdehnung ausgleichen kann. Hat das Ventil oder der Ejektor hingegen eine Verkürzung erfahren, kann diese Verkürzung durch das Bewegen in Richtung der zweiten Endlage ausgeglichen werden, woraufhin zumindest ein Teil der angesteuerten Wegstrecke in Richtung der ersten Endlage bzw. ein Teil der zweiten Kompensationsbewegung nicht ausgeführt und die aufgrund der Verkürzung verschobene erste Endlage bereits zuvor erreicht werden kann. Beispielsweise kann ein Schrittmotor des Antriebs daher infolge der angesteuerten zweiten Kompensationsbewegung einen oder mehrere Schrittverluste erleiden. Auch in diesem Fall stellt sich jedoch eine Schließkraft ein, welche durch die von dem Antrieb während des Bewegens in Richtung der ersten Endlage auf das Verschlusselement übertragbare Kraft bestimmt und daher definiert ist. Dies wird nachstehend noch näher erläutert.

Während vorstehend insbesondere ein Ausgleichen thermischer Spannungen und ein Verhindern einer Leckage aufgrund von Ausdehnungen des Ventils oder Ejektors nach einem Bewegen des Verschlusselements in die erste Endlage bzw. die Geschlossenstellung erläutert wurde, kann das Durchführen des Kompensationszyklus auch nach einem Erreichen der zweiten Endlage bzw. der Offenstellung vorgesehen sein. Insbesondere können sich auch nach dem Erreichen der zweiten Endlage Spannungen aufbauen, die gegebenenfalls ein Verklemmen des Verschlusselements zur Folge haben können. Solche Spannungen können jedoch durch das Durchführen des Kompensationszyklus und insbesondere die Bewegung in Richtung der ersten Endlage bzw. in Richtung der Geschlossenstellung gelöst werden, um das Verschlusselement durch eine darauffolgende Bewegung in Richtung der zweiten Endlage erneut in der zweiten Endlage positionieren zu können. Wird während des Kompensationszyklus ferner eine größere Bewegung auf die zweite Endlage zu als von der zweiten Endlage weg angesteuert, kann zudem eine eventuelle Fehlpositionierung des Verschlusselements ausgeglichen werden, wenn das Verschlusselement etwa aufgrund von Schrittverlusten ursprünglich nicht vollständig in der zweiten Endlage bzw. Offenstellung positioniert wurde. Der Kompensationszyklus kann daher auch dazu dienen, eine eventuelle ursprüngliche Fehlpositionierung nach dem Bewegen in die eine Endlage auszugleichen und das Verschlusselement weiter in Richtung der jeweiligen angestrebten ersten oder zweiten Endlage zu bewegen.

Ferner kann vorgesehen sein, den Kompensationszyklus zyklisch zu wiederholen, sofern das Verschlusselement nicht aus der einen Endlage herausbewegt wird, um auch etwa nach einem ersten Kompensationszyklus aufgebaute thermische Spannungen ausgleichen zu können.

Grundsätzlich kann vorgesehen sein, das Verschlusselement durch die zweite Kompensationsbewegung in die eine Endlage zu bewegen, so dass das Verschlusselement zum Ausführen einer Kompensationsbewegung in die eine Endlage angesteuert werden kann. Jedoch ist es möglich, dass vor dem Durchführen des Kompensationszyklus eine Ausdehnung auftritt, die durch die angesteuerte zweite Kompensationsbewegung in Richtung der einen Endlage, beispielsweise eine Bewegung um eine vorgegebene Wegstrecke, nicht vollständig ausgeglichen werden kann, so dass die eine Endlage nicht vollständig erreicht wird. Auch solche Ausdehnungen können jedoch insbesondere vollständig ausgeglichen werden, indem der Kompensationszyklus zyklisch wiederholt wird.

Zudem kann der Antrieb insbesondere dazu angesteuert werden, das Verschlusselement lediglich geringfügig in Richtung der anderen Endlage zu bewegen, insbesondere lediglich geringfügig in Richtung der zweiten Endlage, nachdem das Verschlusselement in die erste Endlage oder Geschlossenstellung bewegt wurde. Das Verschlusselement kann daher nach einem Bewegen in die erste Endlage durch die erste Kompensationsbewegung in Richtung der zweiten Endlage insbesondere nicht bis in die zweite Endlage und/oder nicht bis in eine der vorstehend erwähnten Zwischenstellungen bewegt werden, sondern beispielsweise lediglich soweit in Richtung der zweiten Endlage, dass die Durchflussöffnung weiterhin blockiert ist und keine Leckage auftritt. Insofern kann das Verschlusselement - nach einem Bewegen in die erste Endlage - durch das Bewegen in Richtung der zweiten Endlage lediglich zwischen der ersten Endlage und der vorstehend erwähnten Sperrstellung und/oder in einem Sperrabschnitt des Ventils oder Ejektors bewegt werden. Auch nach einem Bewegen des Verschlusselements in die zweite Endlage kann das Verschlusselement während des Kompensationszyklus lediglich geringfügig in Richtung der ersten Endlage bewegt werden, so dass der Kompensationszyklus nicht mit einem ungewollten oder relevanten Unterbinden des Durchflusses durch die Durchflussöffnung einhergeht. Hingegen kann das Verschlusselement durch das Bewegen in Richtung der einen Endlage grundsätzlich bis in die eine Endlage bewegt werden.

Ein Ventil kann zumindest einen Eingang mit einer Durchflussöffnung und einen Ausgang mit einer Durchflussöffnung aufweisen, wobei mittels des Verschlusselements ein durch den Eingang eintretender Eingangsstrom und durch den Ausgang austretender Ausgangsstrom regulierbar sein kann. Beispielsweise kann das Verschlusselement dazu vorgesehen sein, die Durchflussöffnung des Eingangs wahlweise zu blockieren oder für einen Durchfluss freizugeben, welcher das Ventil sodann als Ausgangsstrom durch den Ausgang und dessen Durchflussöffnung verlässt. Es ist jedoch auch möglich, eine Durchflussöffnung eines Ausgangs eines Ventils wahlweise mittels eines Verschlusselements zu verschließen oder freizugeben.

Ein Ejektor kann einen Treibanschluss mit einer Durchflussöffnung aufweisen, durch welchen ein Treibmedium eintritt, welches durch eine Treibdüse geführt wird. Durch den dadurch erzeugten Unterdruck kann durch einen Sauganschluss ein Saugmedium angesaugt werden, wozu ein Ejektor eine weitere Durchflussöffnung aufweisen kann. Ein Gemisch aus dem Treibmedium und dem angesaugten Saugmedium kann durch einen Ausgang des Ejektors mit einer weiteren Durchflussöffnung geführt werden, so dass der Ejektor insbesondere zumindest drei Durchflussöffnungen aufweisen kann. Beispielsweise kann es vorgesehen sein, die dem Treibanschluss zugeordnete Durchflussöffnung mittels eines Verschlusselements wahlweise verschließen zu können, um sowohl den Durchfluss von Treibmedium durch den Ejektor als auch die Saugwirkung unterbinden zu können. Ein Ejektor kann grundsätzlich als auch Strahlpumpe bezeichnet werden.

Weitere Ausführungsformen der Erfindung sind den abhängigen Ansprüchen, der Beschreibung und den Zeichnungen zu entnehmen.

Bei einigen Ausführungsformen kann vorgesehen sein, dass der Kompensationszyklus nach dem Erreichen der einen Endlage nach einer vorgegebenen oder vorgebbaren Wartezeit durchgeführt wird. Insofern kann das Verschlusselement bei einigen Ausführungsformen nach dem Erreichen der einen Endlage für eine vorgegebene oder vorgebbare Wartezeit unbewegt bleiben, um nach dem Ablauf der Wartezeit den Kompensationszyklus durchzuführen und insbesondere während der Wartezeit aufgebaute thermische Spannungen lösen zu können.

Es ist jedoch bei einigen Ausführungsformen auch möglich, dass zumindest ein erster Kompensationszyklus unmittelbar nach dem Erreichen der einen Endlage durchgeführt wird. Nach dem ersten Kompensationszyklus kann das Verschlusselement beispielsweise für die erwähnte Wartezeit unbewegt bleiben, um nach dem Ablauf der Wartezeit einen weiteren Kompensationszyklus durchzuführen.

Zudem kann der Kompensationszyklus bei einigen Ausführungsformen zyklisch wiederholt werden, wobei eine Zykluszeit der zyklischen Wiederholung insbesondere der erwähnten Wartezeit entsprechen kann, so dass nach dem Beenden eines jeweiligen Kompensationszyklus ein weiterer Kompensationszyklus durchgeführt werden kann, sofern das Verschlusselement nach dem Beenden des vorhergehenden Kompensationszyklus während der Wartezeit nicht für eine Bewegung aus der einen Endlage heraus angesteuert wird.

Jedoch kann bei einigen Ausführungsformen vorgesehen sein, dass allenfalls eine vorgegebene maximale Anzahl von Kompensationszyklen durchgeführt wird und nach dem Erreichen der maximalen Anzahl von Kompensationszyklen kein weiterer Kompensationszyklus durchgeführt wird, solange das Verschlusselement nicht aus der einen Endlage heraus und daraufhin erneut in eine von der ersten Endlage und der zweiten Endlage bewegt wird. Zudem kann bei einigen Ausführungsformen vorgesehen sein, dass das Verschlusselement nach dem Erreichen der einen Endlage dauerhaft zum Durchführen von Kompensationsbewegungen angesteuert wird, solange das Verschlusselement nicht für eine Bewegung aus der einen Endlage heraus bzw. in die andere Endlage oder eine der erwähnten Zwischenstellungen angesteuert wird, so dass bei einigen Ausführungsformen unmittelbar nach dem Beenden eines Kompensationszyklus ein weiterer Kompensationszyklus begonnen werden kann.

Bei einigen Ausführungsformen kann das Verschlusselement translatorisch zwischen der ersten Endlage und der zweiten Endlage bewegbar sein. Beispielsweise kann das Verschlusselement dazu vorgesehen sein, in einen Ventilsitz eines Sitzventils verfahren zu werden, um eine an dem Ventilsitz ausgebildete Durchflussöffnung zu verschließen. Durch den Kompensationszyklus können somit insbesondere translatorische Ausdehnungen und/oder Verkürzungen des Ventils oder Ejektors entlang einer Bewegungsrichtung des Verschlusselements ausgeglichen werden.

Um das Verschlusselement translatorisch zwischen der ersten Endlage und der zweiten Endlage bewegen zu können, kann der Antrieb beispielsweise einen Spindeltrieb umfassen. Ein derartiger Spindeltrieb kann generell eine Spindel mit Außengewinde (z.B. Gewindestange) und eine Spindelmutter mit Innengewinde umfassen, die mit der Spindel in Gewindeeingriff steht. Durch einen Drehantrieb des einen Elements wird das drehfest, jedoch axial verschieblich gelagerte andere Element in axialer Richtung angetrieben, wobei eine hohe Übersetzung ins Langsame bewirkt werden kann. Das Verschlusselement kann beispielsweise mit einer (insbesondere drehfest gehaltenen) Spindel eines solchen Spindeltriebs verbunden sein. Alternativ hierzu kann das Verschlusselement mit einer (insbesondere drehfest gehaltenen) Spindelmutter eines solchen Spindeltriebs verbunden sein. Der Antrieb des Verschlusselements kann ferner insbesondere einen Schrittmotor umfassen, so dass der Antrieb etwa zum Ausführen einer jeweiligen Anzahl von Schritten des Schrittmotors zum Bewegen des Verschlusselements angesteuert werden kann.

Bei einigen Ausführungsformen kann das Verschlusselement zunächst zum Ausführen der ersten Kompensationsbewegung und daraufhin Ausführen der zweiten Kompensationsbewegung angesteuert werden; oder umgekehrt. Insofern kann das Verschlusselement während des Kompensationszyklus zunächst zu einem Entfernen von der einen Endlage, in welcher das Verschlusselement positioniert wurde, und daraufhin zu einer Bewegung wieder auf die eine Endlage zu angesteuert werden, oder das Verschlusselement kann zunächst zu einer Bewegung auf die eine Endlage zu und daraufhin zu einem Entfernen von der einen Endlage angesteuert werden.

Grundsätzlich kann es vorgesehen sein, das Verschlusselement zum Abschluss des Kompensationszyklus auf die eine Endlage zuzubewegen, also zunächst die erste Kompensationsbewegung und daraufhin die zweite Kompensationsbewegung anzusteuern. Durch diese Reihenfolge der Kompensationsbewegungen kann erreicht werden, dass das Verschlusselement nach dem Kompensationszyklus in der einen Endlage positioniert sein kann und/oder durch das Durchführen des Kompensationszyklus weiter in Richtung der einen Endlage positioniert werden kann als vor Ansteuern des Kompensationszyklus.

Alternativ dazu kann das Verschlusselement jedoch auch zunächst zum Ausführen der zweiten Kompensationsbewegung und daraufhin zum Ausführen der ersten Kompensationsbewegung angesteuert werden, so dass das Verschlusselement zum Abschluss des Kompensationszyklus von der einen Endlage in Richtung der anderen Endlage entfernt positioniert sein kann. Dies kann insbesondere vorgesehen sein, wenn die von der einen Endlage weg gerichtete erste Kompensationsbewegung derart geringfügig ist, dass sich dadurch der Öffnungszustand der Durchflussöffnung letztlich nicht ändert. Wird das Verschlusselement somit zunächst in der ersten Endlage bzw. Geschlossenstellung positioniert und daraufhin ein solcher Kompensationszyklus ausgeführt, kann das Verschlusselement durch die zweite Kompensationsbewegung zunächst einer etwaigen Ausdehnung des Ventils nachgeführt werden, um durch die darauffolgende erste Kompensationsbewegung etwaige Spannungen abzubauen. Ist die erste Kompensationsbewegung dabei derart geringfügig, dass das Verschlusselement nicht aus dem bereits erwähnten Sperrabschnitt herausgeführt wird, kann eine Leckage nach dem Durchführen des Kompensationszyklus trotz der von der ersten Endlage entfernten Positionierung des Verschlusselements verhindert werden.

Bei einigen Ausführungsformen kann das Verschlusselement zum Ausführen der ersten Kompensationsbewegung um eine erste Wegstrecke und zum Ausführen der zweiten Kompensationsbewegung um eine zweite Wegstrecke angesteuert werden, wobei die zweite Wegstrecke größer als die erste Wegstrecke sein kann.

Wie vorstehend bereits erläutert, können durch dieses Vorgehen insbesondere sowohl thermisch bedingte Verkürzungen als auch thermisch bedingte Ausdehnungen des Ventils oder Ejektors ausgeglichen werden, indem das Verschlusselement insbesondere nach einem Bewegen in die erste Endlage bzw. Geschlossenstellung durch die erste Kompensationsbewegung eine Verkürzung ermöglicht, aufgrund der größeren Bewegung in Richtung der ersten Endlage im Zuge der zweiten Kompensationsbewegung jedoch einer etwaigen Ausdehnung gewissermaßen nachgeführt werden kann. Durch die erste Kompensationsbewegung und die insbesondere darauffolgende zweite Kompensationsbewegung können daher Ausdehnungen ausgeglichen werden, welche geringer sind als die Differenz zwischen der zweiten Wegstrecke und der ersten Wegstrecke oder dieser Differenz entsprechen. Bei einer entsprechenden Ausdehnung des Ventils oder Ejektors vor dem Durchführen des Kompensationszyklus kann das Verschlusselement insbesondere um die erste Wegstrecke in Richtung der zweiten Endlage und um die zweite Wegstrecke in Richtung der ersten Endlage bewegt werden.

Sofern eine vor dem Durchführen des Kompensationszyklus erfolgte Ausdehnung des Ventils oder Ejektors, insbesondere eines Gehäuses des Ventils oder Ejektors, jedoch geringer ist als die Differenz zwischen der zweiten Wegstrecke und der ersten Wegstrecke oder das Ventil oder der Ejektor eine Verkürzung erfährt, kann es vorgesehen sein, dass der Antrieb zwar zum Bewegen des Verschlusselements um die zweite Wegstrecke angesteuert wird, das Verschlusselement diese Bewegung jedoch nicht vollständig ausführt. Insbesondere kann das Verschlusselement bereits vor dem vollständigen Zurücklegen der zweiten Wegstrecke in Richtung der ersten Endlage die Durchflussöffnung mit einer durch den Antrieb auf das Verschlusselement übertragbaren und daher definierten Schließkraft verschließen, so dass die erste Endlage erreicht ist und das Verschlusselement nicht weiter auf die Durchflussöffnung zu bewegt werden kann. Die Bewegung des Verschlusselements bricht daher in einem solchen Fall durch Anschlagen an der Durchtrittsöffnung ab, so dass es beispielsweise zu Schrittverlusten eines das Verschlusselement antreibenden Schrittmotors kommen kann. Ebenso kann das Verschlussteil bei einer auf die zweite Endlage zu gerichteten zweiten Kompensationsbewegung die zweite Endlage bereits vor dem Zurücklegen der zweiten Wegstrecke erreichen, etwa, wenn sich das Verschlusselement vor dem Ansteuern der ersten Kompensationsbewegung in der zweiten Endlage befand. Sofern das Ventil oder der Ejektor eine Verkürzung erfährt, die der ersten Wegstrecke zumindest entspricht, kann das Verschlusselement aufgrund dieser Verkürzung zudem gegebenenfalls sogar trotz der ersten Kompensationsbewegung letztlich in der einen Endlage verbleiben, so dass das Verschlusselement bei dem darauffolgenden Ansteuern des Antrieb zum Bewegen des Verschlusselements in Richtung der ersten Endlage unbewegt bleibt.

Ferner kann durch ein solches Verhältnis zwischen der ersten und der zweiten Wegstrecke auch eine etwaige Fehlpositionierung des Verschlusselements ausgeglichen werden, wenn das Verschlusselement ursprünglich nicht bis in eine mechanische Endlage verfahren wurde. Insbesondere kann das Verschlusselement durch das Durchführen des Kompensationszyklus daher weiter in Richtung der zweiten Endlage und/oder der ersten Endlage bewegt werden, falls die jeweilige Endlage ursprünglich beispielsweise aufgrund nicht berücksichtigter Schrittverluste eines Schrittmotors nicht erreicht wurde.

Die erläuterte Ansteuerung zum Bewegen des Verschlusselements um eine erste Wegstrecke in Richtung der anderen Endlage und um eine zweite Wegstrecke in Richtung der einen Endlage ermöglicht somit sowohl einen Ausgleich von thermisch bedingten Verkürzungen als auch von thermisch bedingten Ausdehnungen. Erfährt das Ventil oder der Ejektor zudem eine Ausdehnung, die größer als die Differenz zwischen der ersten Wegstrecke und der zweiten Wegstrecke ist, können auch solche Ausdehnungen durch ein zyklisches Wiederholen des Kompensationszyklus vollständig ausgeglichen werden, wobei zudem durch das sukzessive Nachführen des Verschlusselements nach einem Bewegen in die erste Endlage zumindest verhindert werden kann, dass sich das Verschlusselement aus dem erwähnten Sperrabschnitt entfernt und eine Leckage auftritt.

Das Verschlusselement kann bei einigen Ausführungsformen schrittweise bewegbar sein und zum Ausführen der ersten Kompensationsbewegung um eine erste Anzahl von Schritten und zum Ausführen der zweiten Kompensationsbewegung um eine zweite Anzahl von Schritten angesteuert werden, wobei die zweite Anzahl von Schritten größer als die erste Anzahl von Schritten sein kann. Um eine solche Ansteuerung vornehmen zu können, kann der Antrieb insbesondere einen Schrittmotor umfassen.

Insbesondere kann die zweite Anzahl von Schritten um zumindest einen Schritt größer als die erste Anzahl von Schritten sein. Wiederum ermöglicht die Ansteuerung des Antriebs zum Bewegen des Verschlusselements um eine erste Anzahl von Schritten in Richtung der anderen Endlage und um eine zweite Anzahl von Schritten in Richtung der einen Endlage, den Antrieb zum Bewegen des Verschlusselements um unterschiedliche Wegstrecken anzusteuern und sowohl Verkürzungen als auch Ausdehnungen des Ventils oder Ejektors auszugleichen. Insbesondere können daher sämtliche Schritte der zweiten Anzahl von Schritten ausgeführt werden, wenn das Ventil oder der Ejektor vor dem Durchführen des Kompensationszyklus eine Ausdehnung erfahren oder die eine Endlage ursprünglich nicht erreicht hat, wohingegen Schrittverluste auftreten oder Schritte jedenfalls nicht vollständig ausgeführt werden können, wenn das Ventil oder der Ejektor eine Verkürzung oder lediglich eine Ausdehnung erfährt, die geringer als die durch einen Schritt zurückzulegende Wegstrecke des Verschlusselements ist. Hingegen kann die erste Anzahl von Schritten bei einigen Ausführungsformen stets ausgeführt und/oder die vorstehend erwähnte erste Wegstrecke stets zurückgelegt werden.

Die zweite Anzahl von Schritten kann bei einigen Ausführungsformen um genau einen Schritt größer sein als die erste Anzahl von Schritten. Beispielsweise kann es vorgesehen sein, den Antrieb zum Bewegen des Verschlusselements um zwei Schritte in Richtung der anderen Endlage und um drei Schritte in Richtung der einen Endlage anzusteuern. Bei anderen Ausführungsformen kann es jedoch auch vorgesehen sein, dass die zweite Anzahl von Schritten um genau zwei, genau drei, genau vier oder genau fünf Schritte größer ist als die erste Anzahl von Schritten. Eine größere Differenz zwischen der zweiten Anzahl von Schritten und der ersten Anzahl von Schritten kann insbesondere vorgesehen sein, wenn anwendungs- oder bauartbedingt verhältnismäßig große Ausdehnungen des Ventils oder Ejektors zu erwarten sind oder der Kompensationszyklus erst nach einer Wartezeit nach dem Erreichen der einen Endlage durchgeführt wird, so dass sich relativ große Ausdehnungen ausbilden können. Bei längeren Wartezeiten und/oder erwarteten stärkeren Verkürzungen kann zudem auch die Anzahl von Schritten in Richtung der anderen Endlage erhöht werden, beispielsweise auf drei Schritte, vier Schritte oder fünf Schritte.

Das Verschlusselement kann bei einigen Ausführungsformen zum Ausführen der ersten Kompensationsbewegung zu einer Bewegung um weniger als 50 µm, insbesondere um weniger als 20 µm, in Richtung der anderen Endlage angesteuert werden. Beispielsweise kann das Verschlusselement um etwa 15 µm in Richtung der anderen Endlage bewegt werden. Durch eine derart geringfügige Bewegung kann insbesondere nach einem Bewegen des Verschlusselements in die erste Endlage oder Geschlossenstellung erreicht werden, dass das Verschlusselement trotz der Bewegung in Richtung der zweiten Endlage oder Offenstellung eine Schließkraft ausübt, die einen Durchfluss von Fluid oder Gas durch die Durchflussöffnung verhindert, so dass das Durchführen des Kompensationszyklus nicht zu einer Leckage durch die Durchflussöffnung führt. Vielmehr kann die Durchflussöffnung zuverlässig geschlossen bleiben und die Kompensationsbewegungen dienen lediglich dazu, thermische Spannungen auszugleichen und/oder abzubauen und/oder eine etwaige Fehlpositionierung zu korrigieren.

Bei einigen Ausführungsformen, bei welchen das Verschlusselement schrittweise bewegbar ist, kann das Verschlusselement durch einen Schritt um weniger als 20 µm bewegbar sein. Insbesondere kann das Verschlusselement durch einen Schritt um weniger als 15 µm und/oder um weniger als 10 µm bewegbar sein. Ferner kann das Verschlusselement bei einigen Ausführungsformen durch einen Schritt um etwa 7 µm bewegbar sein. Insofern kann das Verschlusselement bei solchen Ausführungen präzise schrittweise um lediglich derart geringe Wegstrecken bewegt werden, dass das Verschlusselement insbesondere bei einer Bewegung ausgehend von der ersten Endlage in Richtung der zweiten Endlage nicht aus einem Sperrabschnitt des Ventils oder Ejektors hinausbewegt werden muss, sondern die Durchflussöffnung trotz der Bewegung des Verschlusselements zuverlässig verschlossen bleibt.

Bei einigen Ausführungsformen kann die angesteuerte erste Kompensationsbewegung durch eine elastische Verformung eines elastisch verformbaren Kompensationselements kompensiert werden, welches in einem Kraftübertragungspfad von einem Gehäuse des Ventils oder des Ejektors zu dem Verschlusselement angeordnet ist. Bei solchen Ausführungsformen kann das Kompensationselement insbesondere aufgrund einer Bewegung des Verschlusselements in die eine Endlage und der Kraft elastisch verformt werden, welche von einem Anschlag eines Gehäuses des Ventils oder Ejektors, beispielsweise einer Begrenzung der Durchflussöffnung, auf das Verschlusselement ausgeübt und auf das Kompensationselement übertragen wird. Wird das Verschlusselement daraufhin während des Kompensationszyklus zu der ersten Kompensationsbewegung in Richtung der anderen Endlage angesteuert, reduziert sich die von dem Anschlag auf das Verschlusselement ausgeübte und auf das Kompensationsbewegung übertragene Kraft, so dass sich das Kompensationselement entgegen der zuvor erfahrenen elastischen Verformung entfalten und die erste Kompensationsbewegung dadurch kompensieren kann.

Der genannte Kraftübertragungspfad kann sich generell daraus ergeben, dass das Verschlusselement direkt oder indirekt an einem Gehäuse des Ventils oder des Ejektors abgestützt ist, damit eine Schließkraft aufgebaut werden kann. Beispielsweise kann das Verschlusselement über einen Teil eines Spindeltriebs und/oder über ein Lager (insbesondere ein Wälzlager) an dem Gehäuse des Ventils oder des Ejektors abgestützt sein. Das Kompensationselement kann ein in dem Kraftübertragungspfad gezielt vorhandenes Spiel variabel aufnehmen.

Bei solchen Ausführungsformen kann somit durch die erste Kompensationsbewegung zwar eine von dem Verschlusselement ausgeübte Schließkraft reduziert und thermische Spannungen können abgebaut werden, jedoch bleibt das Verschlusselement letztlich unbewegt in der zuvor angesteuerten Position. Das Verschlusselement kann bei solchen Ausführungsformen daher insbesondere eine angesteuerte erste Wegstrecke zum Durchführen der ersten Kompensationsbewegung aufgrund der Kompensation durch das Kompensationselement nicht zurücklegen.

Insbesondere kann vorgesehen sein, dass das Verschlusselement durch das Kompensationselement in Richtung der ersten Endlage oder der Geschlossenstellung vorgespannt ist. Wird das Verschlusselement bei solche Ausführungsformen nach einem Bewegen in die erste Endlage während des Kompensationszyklus zu der ersten Kompensationsbewegung und somit einer Bewegung in Richtung der zweiten Endlage angesteuert, kann diese Bewegung, wie vorstehend erläutert, durch ein Entfalten des Kompensationselements und eine Reduktion der von dem Kompensationselement entfalteten Vorspannung ausgeglichen werden, so dass sich zwar eine von dem Verschlusselement ausgeübte Schließkraft verringern, eine Position des Verschlusselements jedoch unverändert bleiben kann. Beispielsweise kann das Verschlusselement dazu über ein als eine vorgespannte Feder, beispielsweise eine Tellerfeder, ausgebildetes Kompensationselement an dem Gehäuse abgestützt sein, wobei sich die Feder infolge der Reduktion der Schließkraft aufgrund der angesteuerten ersten Kompensationsbewegung ausdehnen und die erste Kompensationsbewegung dadurch ausgleichen kann. Durch ein solches Kompensationselement kann somit infolge des Ansteuerns der ersten Kompensationsbewegung eine von dem Verschlusselement nach dem Bewegen in die erste Endlage ausgeübte Kraft reduziert werden, um dadurch etwaige aufgebaute Spannungen abbauen und ein Verklemmen des Verschlusselements verhindern zu können, ohne dass das Verschlusselement jedoch von der Durchflussöffnung entfernt wird. Insofern kann insbesondere eine Leckage infolge der ersten Kompensationsbewegung zuverlässig verhindert werden.

Zudem kann durch ein solches Kompensationselement - alternativ oder zusätzlich zu dem steuerungstechnischen Ausgleichen thermischer Verkürzungen oder Ausdehnungen des Ventils oder Ejektors - auch eine mechanische Kompensation solcher Ausdehnungen oder Verkürzungen erreicht werden, wie nachstehend noch näher erläutert ist.

Bei einigen Ausführungsformen kann der Kompensationszyklus nach einer vorgegebenen oder vorgebbaren Wartezeit nach dem Erreichen der einen Endlage durchgeführt werden. Es kann somit vorgesehen sein, dass das Verschlusselement nach dem Erreichen der einen Endlage für eine Wartezeit unbewegt bleibt, bevor nach dem Verstreichen der Wartezeit der Kompensationszyklus durchgeführt wird, um insbesondere während der Wartezeit aufgebaute thermische Spannungen abbauen zu können. Die Wartezeit kann beispielsweise in einer Steuerung für den Antrieb des Verschlusselements hinterlegt und/oder wahlweise durch einen Benutzer des Ventils in einer solchen Steuerung einstellbar sein. Insbesondere kann die Wartezeit derart gewählt sein, dass einerseits ein Verklemmen des Verschlusselements und/oder eine ungewollte Leckage verhindert werden kann, andererseits jedoch Bewegungen des Verschlusselements und die damit einhergehenden Belastungen der Komponenten des Ventils oder Ejektors minimiert werden können. Insofern kann die Wartezeit von der Bauart und/oder Anwendung des Ventils oder Ejektors abhängen, insbesondere der zu erwartenden thermischen Verhältnisse, einer Temperatur des durchströmenden Mediums und/oder den Materialen des Ventils oder des Ejektors. Grundsätzlich kann die Wartezeit jedoch auch von einer Steuerung für den Antrieb des Verschlusselements berechnet und dadurch vorgegeben werden.

Die Wartezeit kann bei einigen Ausführungsformen kleiner als 120 Sekunden sein. Insbesondere kann die Wartezeit kleiner als 60 Sekunden und/oder kleiner als 30 Sekunden sein. Ferner kann die Wartezeit bei einigen Ausführungsformen etwa 10 Sekunden, insbesondere zwischen 9 Sekunden und 11 Sekunden und/oder genau 10 Sekunden, betragen. Insbesondere kann die Wartezeit in Abhängigkeit von der jeweiligen Anwendung und/oder der jeweiligen Bauart des Ventils oder des Ejektors, beispielsweise den verwendeten Materialien, gewählt sein. Grundsätzlich können beispielsweise kürzere Wartezeiten vorgesehen sein, wenn - etwa bei der Verwendung sehr kalter oder sehr heißer Fluide oder Gase - verhältnismäßig hohe thermische Spannungen in geringer Zeit zu erwarten sind. Bei einigen Ausführungsformen kann jedoch auch vorgesehen sein, dass die Wartezeit weniger als 500 Sekunden oder 500 Sekunden beträgt.

Bei einigen Ausführungsformen kann ferner ein erster Kompensationszyklus unmittelbar nach dem Erreichen der einen Endlage durchgeführt werden. Bei solchen Ausführungsformen kann das Verschlusselement somit unmittelbar nach dem Erreichen zum Ausführen der beiden Kompensationsbewegungen angesteuert werden. Nach dem Durchführen des ersten Kompensationszyklus kann der Kompensationszyklus beispielsweise zyklisch mit der vorgegebenen oder vorgebbaren Wartezeit als Zykluszeit, beispielsweise einer Wartezeit von 10 Sekunden, wiederholt werden, sofern das Verschlusselement nicht aus der jeweiligen Endlage herausbewegt wird. Zudem kann auch vorgesehen sein, die erste Kompensationsbewegung und die zweite Kompensationsbewegung dauerhaft aufeinanderfolgend durchzuführen, solange das Verschlusselement nicht für eine Bewegung aus der einen Endlage heraus angesteuert wird, so dass sich etwa an den ersten Kompensationszyklus unmittelbar ein weiterer Kompensationszyklus anschließen kann, ohne dass das Verschlusselement zwischen den Kompensationszyklen für eine Wartezeit unbewegt bleibt.

Bei einigen Ausführungsformen kann das Verschlusselement in die erste Endlage bewegt und der Kompensationszyklus nach dem Bewegen des Verschlusselements in die erste Endlage durchgeführt werden. Insbesondere kann durch dieses Durchführen des Kompensationszyklus ein Verklemmen des Verschlusselements in der ersten Endlage bzw. Geschlossenstellung aufgrund von thermischen Spannungen und/oder eine Leckage aufgrund einer Ausdehnung des Ventils oder Ejektors verhindert werden.

Die Durchflussöffnung kann bei einigen Ausführungsformen durch das Bewegen des Verschlusselements in die erste Endlage mit einer ersten Schließkraft verschlossen werden.

Insbesondere kann die erste Schließkraft vorgegeben oder vorgebbar sein und beispielsweise durch die von dem Antrieb auf das Verschlusselement übertragbare Kraft definiert sein. Diese Kraft kann beispielsweise durch einen Motorstrom oder ein Motormoment eines Motors des Antriebs bestimmt sein, wobei der Motorstrom oder das Motormoment gegebenenfalls einstellbar sein kann. Insofern kann die erste Schließkraft der bei dem Bewegen des Verschlusselements in die erste Endlage auf das Verschlusselement übertragenen und/oder dazu eingestellten Kraft entsprechen. Beispielsweise kann das Verschlusselement die erste Schließkraft auf eine Dichtung der Durchflussöffnung ausüben.

Die erste Endlage kann somit grundsätzlich durch das Erreichen der Schließkraft definiert sein, wobei die absolute Position der ersten Endlage jedoch von dem Zustand des Ventils oder Ejektors abhängen kann. Insbesondere kann sich eine absolute Position der ersten Endlage aufgrund von Ausdehnungen oder Verkürzungen des Ventils oder Ejektors verschieben, da das Verschlusselement beispielsweise aufgrund einer Ausdehnung des Ventils oder Ejektors um eine größere Wegstrecke ausgehend von der zweiten Endlage auf die Durchflussöffnung zu bewegt werden kann, bevor das Verschlusselement die Durchflussöffnung mit der von dem Antrieb übertragbaren Kraft verschließt.

Die erste Schließkraft kann bei einigen Ausführungsformen einer durch den Antrieb auf das Verschlusselement übertragbaren Kraft, insbesondere einer während der Bewegung in die erste Endlage übertragbaren und/oder übertragenen Kraft, entsprechen.

Bei einigen Ausführungsformen kann die Durchflussöffnung durch Ausführen der zweiten Kompensationsbewegung mit einer zweiten Schließkraft verschlossen werden, wobei die zweite Schließkraft geringer sein kann als die erste Schließkraft.

Auch die zweite Schließkraft kann beispielsweise vorgegeben oder vorgebbar sein und insbesondere einer durch den Antrieb während der zweiten Kompensationsbewegung auf das Verschlusselement übertragbaren und/oder übertragenen Kraft entsprechen. Insofern kann beispielsweise vorgesehen sein, dass ein Motorstrom eines Motors des Antriebs bei einem Bewegen des Verschlusselements in Richtung der ersten Endlage im Zuge des Kompensationszyklus gegenüber dem vorhergehenden Bewegen des Verschlusselement in die erste Endlage reduziert wird. Beispielsweise kann der während des Bewegens des Verschlusselements in Richtung der ersten Endlage angelegte Motorstrom 80% des Motorstroms entsprechen, welcher zum Bewegen des Verschlusselements in die erste Endlage angelegt wird. Eine derart definierte zweite Schließkraft kann insbesondere eingestellt werden, wenn das Verschlusselement die erste Endlage aufgrund der angesteuerten zweiten Kompensationsbewegung erreicht.

Durch die Verringerung der Schließkraft kann insbesondere die Belastung der Bauteile aufgrund des Durchführens des Kompensationszyklus reduziert werden, um eine mögliche Zunahme der Belastung - insbesondere bei einer zyklischen Wiederholung des Kompensationszyklus mit einer geringen Zykluszeit zwischen aufeinanderfolgenden Kompensationszyklen - im Vergleich zu einem Belassen des Verschlusselements in der ersten Endlage zu minimieren. Zudem kann durch das Einstellen einer verringerten zweiten Schließkraft die Durchflussöffnung mit einer besser definierten Kraft verschlossen werden, indem das Verschlusselement gewissermaßen sanfter auf eine Dichtung der Durchflussöffnung aufgefahren werden kann und Kraftspitzen oder Kraftverluste infolge eines Anschlagens des Verschlusselements mit hoher Kraft vermieden werden können.

Der Antrieb kann bei einigen Ausführungsformen dazu angesteuert werden, das Verschlusselement bei der zweiten Kompensationsbewegung mit einer geringeren Kraft als bei dem Bewegen in die eine Endlage anzutreiben. Insofern kann der Antrieb bei einigen Ausführungsformen dazu angesteuert werden, das Verschlusselement mit einer geringeren Kraft in Richtung der einen Endlage als in die eine Endlage zu bewegen. Beispielsweise kann dazu ein Motorstrom eines Motors des Antriebs zum Bewegen des Verschlusselements in Richtung der einen Endlage - also während der zweiten Kompensationsbewegung - gegenüber einer Einstellung zum Bewegen des Verschlusselements in die eine Endlage - welche insbesondere die erwähnte erste Schließkraft definieren kann - verringert werden. Erreicht das Verschlusselement somit bei solchen Ausführungsformen beispielsweise durch die angesteuerte zweite Kompensationsbewegung erneut die erste Endlage, in welcher das Verschlusselement die Durchflussöffnung mit der von dem Antrieb während des Bewegens in Richtung der ersten Endlage übertragbaren Kraft verschließt, kann die Durchflussöffnung mit einer im Vergleich zu der ersten Schließkraft verringerten, jedoch klarer definierten und weniger belastenden Kraft verschlossen werden. Insofern kann das Verschlusselement bei einigen Ausführungsformen bei der zweiten Kompensationsbewegung mit einer im Vergleich zu der ersten Schließkraft reduzierten Kraft bewegt werden.

Die durch den Antrieb auf das Verschlusselement übertragbare Kraft kann bei einigen Ausführungsformen einstellbar sein, insbesondere durch Einstellen eines elektrischen Motorstroms eines Motors des Antriebs.

Bei einigen Ausführungsformen kann die von dem Antrieb bei dem Bewegen in die eine Endlage auf das Verschlusselement übertragene Kraft vor einem erwarteten Erreichen der einen Endlage reduziert werden.

Um beispielsweise sicherzustellen, dass die erste Endlage zuverlässig erreicht wird, kann bei einem Antreiben des Verschlusselements mittels eines Schrittmotors vorgesehen sein, eine Anzahl von Schritten einzustellen, bei welcher das Verschlusselement über die erwartete Position der ersten Endlage hinaus verfahren würde, so dass Schrittverluste des Schrittmotors nach dem Erreichen der ersten Endlage in Kauf genommen werden. Ein ähnliches Vorgehen kann auch zum Bewegen des Verschlusselements in die zweite Endlage oder Offenstellung vorgesehen sein. Bei der Verwendung eines Schrittmotors kann der Motorstrom daher bei solchen Ausführungsformen bereits vor dem erwarteten Erreichen der jeweiligen Endlage, beispielsweise etwa zehn Schritte vor Erreichen der erwarteten Endlage, reduziert werden, um die Kraft, mit welcher das Verschlusselement bei Erreichen der jeweiligen Endlage anschlägt, zu reduzieren und beispielsweise ein möglichst sanftes Auftreffen des Verschlusselements auf eine Dichtung der Durchflussöffnung zu erreichen.

Beispielsweise kann die von dem Antrieb auf das Verschlusselement übertragene Kraft vor einem erwarteten Erreichen der einen Endlage auf diejenige Kraft reduziert werden, mit welcher das Verschlusselement während des Kompensationszyklus in Richtung der einen Endlage bewegt wird. Insofern kann die übertragene Kraft insbesondere bei einem Bewegen in die erste Endlage auf die vorstehend erwähnte zweite Schließkraft reduziert werden. Die Kraftreduktion kann insbesondere erfolgen, indem ein Motorstrom eines Motors des Antriebs verringert wird, so dass der Motorstrom beispielsweise vor Erreichen der Endlage auf 80% des ursprünglichen Motorstroms reduziert werden kann.

Im Unterschied zu einem Bewegen des Verschlusselements in die eine Endlage, zu welcher der Antrieb somit insbesondere übersteuert werden kann, kann das Bewegen in Richtung der einen Endlage während des Kompensationszyklus durch Ansteuern einer Bewegung um eine festgelegte Wegstrecke und/oder eine festgelegte Schrittzahl erfolgen. Daher kann die eine Endlage durch das Bewegen in Richtung der einen Endlage lediglich dann erreicht werden, wenn der Abstand des Verschlusselements zu der einen Endlage nach dem Bewegen in Richtung der anderen Endlage und/oder vor dem Durchführen der zweiten Kompensationsbewegung geringer ist als die festgelegte Wegstrecke und/oder Schrittzahl. Grundsätzlich ist jedoch auch eine kraftgesteuerte Bewegung in Richtung der einen Endlage denkbar, bei welcher das Verschlusselement stets bis in die eine Endlage bewegt werden kann.

Bei einigen Ausführungsformen kann der Durchfluss des Fluids oder Gases durch die Durchflussöffnung durch Bewegen des Verschlusselements in einen Sperrabschnitt des Ventils oder Ejektors blockierbar sein, welcher durch die erste Endlage und eine gegenüber der ersten Endlage in Richtung der zweiten Endlage versetzte Sperrstellung begrenzt ist, und das Verschlusselement kann - nach einem Bewegen in die erste Endlage - durch die erste Kompensationsbewegung lediglich innerhalb des Sperrabschnitts bewegt werden. Insofern kann das Verschlusselement bei solchen Ausführungsformen durch das Bewegen in Richtung der zweiten Endlage zwischen der ersten Endlage und der Sperrstellung und nicht aus dem Sperrabschnitt heraus bewegt werden, so dass der Durchfluss durch die Durchflussöffnung trotz des Bewegens des Verschlusselements in Richtung der zweiten Endlage blockiert bleibt.

Allgemein kann das Bewegen des Verschlusselements in Richtung der zweiten Endlage - nach einem Bewegen in die erste Endlage - somit keinen Durchfluss von Gas oder Fluid durch die Durchflussöffnung und/oder das Ventil oder den Ejektor zur Folge haben.

Die Sperrstellung kann grundsätzlich relativ zu der ersten Endlage definiert sein, wobei eine absolute Position der ersten Endlage wiederum von äußeren Bedingungen und beispielsweise einer Ausdehnung des Ventils oder Ejektors abhängen kann. Beispielsweise kann die Sperrstellung durch eine Anzahl von Schritten eines schrittweise bewegbaren Verschlusselements ausgehend von der ersten Endlage in Richtung der zweiten Endlage definiert sein, wobei das Verschlusselement lediglich um diese Anzahl von Schritten oder eine geringere Anzahl von Schritten in Richtung der zweiten Endlage bewegt bzw. der Antrieb zum Bewegen des Verschlusselements um eine solche Anzahl von Schritten angesteuert werden kann. Verändert sich die Position der ersten Endlage aufgrund von Ausdehnungen oder Verkürzungen des Ventils oder Ejektors und wird diese Veränderung durch das Durchführen des Kompensationszyklus ausgeglichen, verändert sich auch die Sperrstellung entsprechend, so dass ausgehend von der neuen ersten Endlage durch Bewegen um die gleichbleibende Schrittzahl und/oder Wegstrecke des Verschlusselements in Richtung der zweiten Endlage sichergestellt werden kann, dass sich die Durchflussöffnung nicht öffnet.

Bei einigen Ausführungsformen kann der Antrieb dazu angesteuert werden, das Verschlusselements bei der ersten Kompensationsbewegung mit einer größeren Kraft als bei der zweiten Kompensationsbewegung und/oder als bei dem Bewegen in die eine Endlage anzutreiben. Insofern kann der Antrieb bei einigen Ausführungsformen zum Bewegen des Verschlusselements mit einer größeren Kraft in Richtung der anderen Endlage als in Richtung der einen Endlage angesteuert werden und/oder der Antrieb kann bei einigen Ausführungsformen zum Bewegen des Verschlusselements mit einer größeren Kraft in Richtung der anderen Endlage als in die eine Endlage angesteuert werden.

Durch diese Erhöhung der Kraft im Vergleich zu dem Antreiben während der zweiten Kompensationsbewegung und/oder während des Bewegens in die eine Endlage kann erreicht werden, dass das Verschlusselement trotz sich vor dem Durchführen des Kompensationszyklus aufbauender thermischer Spannungen oder Kräfte, die zu einer Erhöhung der auf das Verschlusselement wirkenden Kraft und/oder einem Einklemmen des Verschlusselements führen können, in Richtung der anderen Endlage bewegt und diese thermischen Spannungen oder Kräfte ausgeglichen werden können. Beispielsweise kann hierzu ein Motorstrom im Vergleich zu dem Bewegen des Verschlusselements in die eine Endlage oder in Richtung der einen Endlage erhöht werden.

Zudem kann es bei einigen Ausführungsformen vorgesehen sein, dass das Verschlusselement in die andere Endlage und/oder eine Zwischenstellung bewegt wird, wobei der Antrieb zum Bewegen des Verschlusselements in die andere Endlage und/oder die Zwischenstellung mit einer im Vergleich zu dem Bewegen des Verschlusselements in die eine Endlage und/oder im Vergleich zu der zweiten Kompensationsbewegung erhöhten Kraft angesteuert werden kann. Auch bei einem Bewegen des Verschlusselements in die andere Endlage können somit etwaige Spannungen zuverlässig überwunden werden. Insbesondere kann der Motorstrom dabei zu Beginn der Bewegung in die andere Endlage und/oder eine Zwischenstellung erhöht werden, um den Motorstrom daraufhin wieder zu reduzieren und die Bewegung beispielsweise mit der Kraft, mit welcher das Verschlusselement in die eine Endlage bewegt wurde, zu Ende zu führen.

Bei einigen Ausführungsformen kann der Kompensationszyklus zyklisch wiederholt werden. Insbesondere kann der Kompensationszyklus solange zyklisch wiederholt werden, wie das Verschlusselement nicht in die andere Endlage oder eine der erwähnten Zwischenstellungen bewegt wird, um einen Durchfluss durch die Durchflussöffnungen bewusst zu verändern. Das zyklische Ansteuern kann daher durchgeführt werden, solange die Durchflussöffnung nach dem Bewegen in die erste Endlage verschlossen ist oder verschlossen bleiben soll bzw. solange die Durchflussöffnung nach dem Bewegen in die zweite Endlage freigegeben ist oder freigegeben bleiben soll.

Ferner kann eine Zykluszeit zwischen zwei aufeinanderfolgenden Durchführungen des Kompensationszyklus bei einigen Ausführungsformen konstant sein oder sukzessive zunehmen. Insbesondere kann die Zykluszeit bei einigen Ausführungsformen der bereits erwähnten Wartezeit entsprechen.

Beispielsweise kann es vorgesehen sein, den Antrieb zyklisch zum Durchführen des Kompensationszyklus anzusteuern, nachdem das Verschlusselement in die erste Endlage oder die zweite Endlage bewegt wurde. Bei einer Wahl einer konstanten Wartezeit von 10 Sekunden kann beispielsweise vorgesehen sein, dass der Antrieb 10 Sekunden nach dem Erreichen der einen Endlage zum Durchführen des Kompensationszyklus angesteuert wird, um 10 Sekunden nach Abschließen des Kompensationszyklus erneut zum Durchführen des Kompensationszyklus angesteuert zu werden. Bei einigen Ausführungsformen können jedoch auch dauerhaft Kompensationszyklen durchgeführt werden, so dass nach dem Beenden eines Kompensationszyklus unmittelbar ein weiterer Kompensationszyklus begonnen werden kann, solange das Verschlusselement nicht für eine Bewegung aus der einen Endlage heraus bzw. für eine Bewegung in die andere Endlage oder in eine der erwähnten Zwischenstellungen angesteuert wird.

Alternativ zu einer konstanten Zykluszeit kann jedoch auch vorgesehen sein, dass die Zeit zwischen jeweiligen Kompensationszyklen und somit die Zykluszeit sukzessive mit jedem Zyklus oder nach einer vorgegebenen Anzahl von Kompensationszyklen, beispielsweise mit jedem zweiten oder dritten Zyklus, zunimmt, so dass die genannten Bewegungen zunehmend seltener ausgeführt werden können. Durch diese sukzessive Verlängerung der Zykluszeit kann die mit den Bewegungen des Verschlusselements einhergehende Belastung der Komponenten des Ventils des Ejektors minimiert werden und dem Effekt Rechnung getragen werden, dass sich das Ventil oder der Ejektor mit zunehmender Dauer des Verbleibens in der einen Endlage und insbesondere der Unterbrechung des Durchflusses durch die Durchflussöffnung ohnehin zunehmend einem thermischen Gleichgewicht annähert und sich etwaige thermische Spannungen langsamer aufbauen. Daher können solche Spannungen auch bei sich verlängernden Zykluszeiten ausgeglichen werden.

Bei einigen Ausführungsformen kann das zyklische Wiederholen des Kompensationszyklus nach einem Durchführen einer vorgegebenen oder vorgebbaren maximalen Anzahl von Kompensationszyklen beendet werden. Insbesondere kann somit eine vorgegebene oder vorgebbare maximale Anzahl von Kompensationszyklen durchgeführt werden, wobei nach dem Durchführen der maximalen Anzahl von Kompensationszyklen ein weiterer Kompensationszyklus erst nach einem Bewegen des Verschlusselements aus der einen Endlage heraus und einem neuerlichen Bewegen des Verschlusselements in eine von der ersten Endlage und der zweiten Endlage durchgeführt werden kann. Beispielsweise kann vorgesehen sein, maximal fünf oder maximal zehn Kompensationszyklen durchzuführen.

Beispielsweise kann dazu in einer Steuerung eine solche maximale Anzahl von Kompensationszyklen hinterlegt und/oder durch einen Bediener des Ventils oder Ejektors vorgebbar sein. Durch ein solches Beenden der zyklischen Wiederholung von Kompensationszyklen können insbesondere unnötige und zu Belastungen der Komponenten des Ventils oder des Ejektors führende Bewegungen des Verschlusselements vermieden werden, wenn das Verschlusselement über einen längeren Zeitraum in der eingenommen Endlage verbleibt und daher angesichts der zunehmenden Annäherung an ein thermisches Gleichgewicht keine größeren thermischen Ausdehnungen oder Verkürzungen des Ventils oder Ejektors mehr zu erwarten sind.

Die Erfindung betrifft ferner ein Ventil oder einen Ejektor, welches oder welcher ein zwischen einer ersten Endlage und einer zweiten Endlage bewegbares Verschlusselement umfasst, wobei das Verschlusselement dazu ausgebildet ist, eine Durchflussöffnung des Ventils oder Ejektors in der ersten Endlage gegen einen Durchfluss von Fluid oder Gas zu blockieren und die Durchflussöffnung in der zweiten Endlage für einen Durchfluss von Fluid oder Gas freizugeben. Ferner umfasst das Ventil oder der Ejektor ein elastisch verformbares Kompensationselement, welches in einem Kraftübertragungspfad von einem Gehäuse des Ventils oder Ejektors zu dem Verschlusselement angeordnet ist. Insbesondere kann das Ventil oder der Ejektor ferner einen Antrieb zum Bewegen des Verschlusselements umfassen.

Das elastisch verformbare Kompensationselement kann generell wie vorstehend erläutert aufgebaut und angeordnet sein.

Ein solches in einem Kraftübertragungspfad von einem Gehäuse des Ventils oder Ejektors, welches auch als Hülle bezeichnet werden kann, und dem Verschlusselement angeordnetes elastisch verformbares Kompensationselement kann es insbesondere ermöglichen, beispielsweise infolge von thermisch bedingten Verkürzungen oder Ausdehnungen des Gehäuses auftretende Änderungen einer von dem Gehäuse auf das Verschlusselement übertragenen Kraft durch eine elastische Verformung aufzunehmen und dadurch eine mechanische Kompensation solcher Ausdehnungen und/oder Verkürzungen zu erreichen.

Beispielsweise kann das Kompensationselement dazu ausgebildet sein, eine von der zweiten Endlage (oder Offenstellung) weg gerichtete Vorspannung auf das Verschlusselement auszuüben, wenn das Verschlusselement in die erste Endlage (oder Geschlossenstellung) bewegt wurde. Insbesondere kann das Kompensationselement dabei elastisch verformt sein, wenn das Verschlusselement in der ersten Endlage positioniert ist, so dass das Kompensationselement eine dieser elastischen Verformung entgegengerichtete Kraft auf das Verschlusselement ausüben und das Verschlusselement dadurch weiter in Richtung der Durchflussöffnung vorspannen kann. Dehnt sich das Gehäuse des Ventils oder des Ejektors daraufhin aus, reduziert sich die von dem Gehäuse beispielsweise über eine Begrenzung der Durchflussöffnung auf das Verschlusselement ausgeübte Kraft, so dass sich dementsprechend auch die auf das Kompensationselement übertragene Kraft reduzieren und sich das Kompensationselement entgegen der zuvor erfahrenen elastischen Verformung entfalten kann. Durch dieses Entfalten oder Verformen des Kompensationselements kann das Verschlusselement der Ausdehnung des Gehäuses und insbesondere der sich aufgrund dieser Ausdehnung entfernenden Durchflussöffnung nachgeführt werden, so dass die Durchflussöffnung dennoch zuverlässig gegen eine Leckage verschlossen bleiben kann. Insofern kann eine solche Ausdehnung zwar zu einer Reduktion einer Schließkraft führen, welche letztlich der aufgrund des Entfaltens des Kompensationselement reduzierten Vorspannung auf das Verschlusselement entspricht, jedoch können eine Positionsänderung des Verschlusselements relativ zu der Durchflussöffnung infolge einer Ausdehnung des Gehäuses des Ventils oder Ejektors und eine dadurch bedingte Leckage verhindert werden.

Im umgekehrten Fall einer Verkürzung des Gehäuses des Ventils oder Ejektors in einer Situation, in welcher sich das Verschlusselement in der ersten Endlage befindet, kann sich eine von dem Gehäuse auf das Verschlusselement in Richtung der zweiten Endlage ausgeübte Kraft erhöhen, wodurch das Verschlusselement grundsätzlich verklemmen könnte. Indem jedoch das elastisch verformbare Kompensationselement in dem Kraftübertragungspfad von dem Gehäuse auf das Verschlusselement angeordnet ist, kann diese erhöhte Kraft durch eine elastische Verformung des Kompensationselement aufgenommen werden, so dass das Verschlusselement der Verkürzung gewissermaßen ausweichen und ein Verklemmen des Verschlusselements verhindert werden kann.

In entsprechender Weise können grundsätzlich auch Ausdehnungen oder Verkürzungen in der zweiten Endlage ausgeglichen werden, indem das Kompensationselement beispielsweise elastisch verformt sein kann, wenn das Verschlusselement in der zweiten Endlage positioniert ist, um dadurch eine von der ersten Endlage weg gerichtete Vorspannung auf das Verschlusselement zu entfalten.

Auch durch eine solche mechanische Kompensation von durch thermische Spannungen von dem Gehäuse auf das Verschlusselement übertragenen Kräfte kann somit die der Erfindung zugrundeliegende Aufgabe gelöst werden, ein Ventil oder einen Ejektor zu schaffen, bei welchem ein zuverlässiges Verschließen oder Öffnen einer Durchflussöffnung des Ventils oder Ejektors, insbesondere auch über längere Zeiträume, sowie ein darauffolgendes zuverlässiges Bewegen des Verschlusselements in eine entgegengesetzte Endlage erreicht werden kann, indem einerseits ein zuverlässiges Positionieren des Verschlusselements in den Endlagen auch bei etwaigen Ausdehnungen des Gehäuses erreicht und andererseits ein Verklemmen des Verschlusselements bei einer Verkürzung des Gehäuses verhindert werden kann. Insbesondere kann eine solche mechanische Kompensation alternativ oder zusätzlich zu dem vorstehend erläuterten Positionierverfahren vorgesehen sein, um die der Erfindung zugrundeliegende Aufgabe zu lösen.

Bei dem Kompensationselement kann es sich beispielsweise um eine Feder handeln. Es ist jedoch auch möglich, dass das Verschlusselement einen elastisch verformbaren Abschnitt aufweist, etwa einen aus einem Gummi oder Kunststoff gefertigten Abschnitt, welcher das Kompensationselement bildet und/oder dass ein solcher Abschnitt an einer Komponente des Ventils oder Ejektors vorgesehen ist, welche sich in dem Kraftübertragungspfad von dem Gehäuse auf das Verschlusselement befindet. Ferner kann das Kompensationselement insbesondere entlang einer Bewegungsrichtung des Verschlusselements elastisch verformbar sein, um Ausdehnungen und/oder Verkürzungen des Gehäuses des Ventils oder Ejektors bezüglich dieser Bewegungsrichtung durch elastisches Verformen des Kompensationselements mechanisch ausgleichen zu können.

Bei einigen Ausführungsformen kann das Verschlusselement über das Kompensationselement an dem Gehäuse abgestützt sein. Insbesondere kann das Verschlusselement direkt oder indirekt über das Kompensationselement an dem Gehäuse abgestützt sein. Beispielsweise kann das Kompensationselement unmittelbar an einem Gehäuseabschnitt des Gehäuses angeordnet sein, so dass das Verschlusselement direkt über das Verschlusselement an dem Gehäuse abgestützt sein kann. Es ist jedoch beispielsweise auch möglich, dass das Kompensationselement an einer relativ zu dem Gehäuse unbeweglichen Komponente eines Antriebs des Verschlusselements, beispielsweise einem an dem Gehäuse befestigten Motor, abgestützt ist, so dass das Verschlusselement indirekt über das Kompensationselement und die Komponente des Antriebs an dem Gehäuse abgestützt sein kann. Unabhängig von einer direkten oder indirekten Abstützung ermöglicht es einen solche Abstützung des Verschlusselements über ein elastisch verformbares Kompensationselement jedoch, das Verschlusselement infolge einer Änderung einer auf das Verschlusselement ausgeübten Kraft unter Umgehung des Antriebs relativ zu der Abstützung und damit relativ zu dem Gehäuse durch elastisches Verformen des Kompensationselements zu bewegen, um solche Kraftänderungen ausgleichen zu können. Insbesondere können daher Kraftänderungen aufgrund von thermisch bedingten Längenänderungen des Gehäuses, wenn sich das Verschlusselement in einer der Endlagen und insbesondere der ersten Endlage befindet, ausgeglichen werden.

Das Verschlusselement kann bei einigen Ausführungsformen translatorisch zwischen der ersten Endlage und der zweiten Endlage bewegbar sein. Insbesondere kann das Kompensationselement bei solchen Ausführungsformen axial bezüglich der translatorischen Bewegung des Verschlusselements elastisch verformbar sein.

Das Verschlusselement kann bei einigen Ausführungsformen durch das Kompensationselement in Richtung der ersten Endlage vorgespannt sein. Insbesondere kann das Verschlusselement bei einigen Ausführungsformen durch das Kompensationselement in Richtung einer von der zweiten Endlage weg gerichteten Bewegung vorgespannt sein, wenn das Verschlusselement in der ersten Endlage positioniert ist. Wie bereits erläutert, können durch eine solche Vorspannung insbesondere Ausdehnungen und/oder Verkürzungen des Ventils oder Ejektors ausgeglichen werden, wenn das Verschlusselements in der ersten Endlage positioniert und dadurch ein Fluss von Fluid oder Gas durch die Durchflussöffnung blockiert ist.

Ferner kann das Kompensationselement bei einigen Ausführungsformen dazu ausgebildet sein, infolge einer Bewegung des Verschlusselements in die erste Endlage elastisch verformt zu werden. Beispielsweise kann infolge des Bewegens des Verschlusselements in die erste Endlage und eines Anschlagens des Verschlusselements an einem Anschlag des Gehäuses, beispielsweise einer Begrenzung und/oder Dichtung der Durchflussöffnung, eine Kraft über das Verschlusselement auf das Kompensationselement übertragen werden, durch welche das Kompensationselement elastisch verformt werden kann. Das Kompensationselement kann somit insbesondere elastisch verformt sein, wenn das Verschlusselement in der ersten Endlage positioniert ist. Durch diese elastische Verformung kann das Kompensationselement eine Vorspannung auf das Verschlusselement ausüben, welche von der zweiten Endlage weg und auf die Durchflussöffnung zu gerichtet ist. Erfährt das Ventil oder der Ejektor daraufhin eine Ausdehnung, reduziert sich die von dem Anschlag auf das Verschlusselement ausgeübte und auf das Kompensationselement übertragene Kraft, so dass das Kompensationselement eine der durch das Bewegen des Verschlusselements in die erste Endlage erzeugten Verformung entgegengerichtete Verformung ausführen und das Verschlusselement der Ausdehnung des Ventils oder Ejektors dadurch nachführen kann. Insbesondere kann somit eine Elastizität des Kompensationselements derart mit einer durch einen Antrieb für das Verschlusselement bei der Bewegung in die erste Endlage auf das Verschlusselement übertragenen Kraft abgestimmt sein, dass das Kompensationselements durch die von dem Antrieb übertragene Kraft elastisch verformbar ist.

Beispielsweise kann vorgesehen sein, dass eine in dem Kraftübertragungspfad von dem Gehäuse zu dem Verschlusselement angeordnete Feder infolge einer Bewegung des Verschlusselements in die erste Endlage komprimiert wird, so dass das Verschlusselement einer etwaigen Ausdehnung des Ventils oder Ejektors durch Entfalten der Feder nachgeführt werden kann.

Das Kompensationselement kann bei einigen Ausführungsformen durch eine auf das Verschlusselement ausgeübte und in Richtung der zweiten Endlage gerichtete Kraft elastisch verformbar sein, wenn das Verschlusselement in der ersten Endlage positioniert ist. Insbesondere kann das Kompensationselement somit dazu ausgebildet sein, größere Kräfte als eine durch den Antrieb während des Bewegens des Verschlusselements in die erste Endlage auf das Verschlusselement übertragene Kraft bzw. eine von dem Verschlusselement in der ersten Endlage entfaltete Schließkraft durch elastische Verformung aufzunehmen. Das Kompensationselement kann daher beispielsweise eine aufgrund einer Verkürzung des Gehäuses des Ventils oder Ejektors auf das Verschlusselement ausgeübte Kraft durch eine insbesondere weitere elastische Verformung aufnehmen, so dass das Verschlusselement der Verkürzung gewissermaßen ausweichen oder mit der Verkürzung des Gehäuses mitgeführt werde kann. Ein solche Ausbildung des Kompensationselements kann somit insbesondere ein Verklemmen des Verschlusselements aufgrund von Verkürzungen des Gehäuses verhindern, wenn das Verschlusselement in der ersten Endlage positioniert ist. Um durch eine auf das Verschlusselement ausgeübte und in Richtung der zweiten Endlage gerichtete Kraft elastisch verformt werden zu können, wenn das Verschlusselement in der ersten Endlage positioniert ist, kann das Kompensationselement insbesondere nicht bereits durch das Bewegen des Verschlusselements in die erste Endlage vollständig elastisch verformt werden. Beispielsweise können daher Windungen eines als eine Feder ausgebildeten Kompensationselements, welches durch das Bewegen des Verschlusselements in die erste Endlage bereits komprimiert wird, durch dieses Bewegen des Verschlusselements nicht in Anlage zueinander gelangen, so dass eine weitere Komprimierung der Feder im Falle einer Verkürzung des Gehäuses möglich ist.

Das Kompensationselement kann bei einigen Ausführungsformen an dem Verschlusselement oder einem gemeinsam mit dem Verschlusselement translatorisch bewegbaren Verbindungsabschnitt angeordnet sein. Beispielsweise kann ein solches Kompensationselement durch einen elastisch verformbaren Abschnitt des Verschlusselements gebildet sein, welcher insbesondere infolge eines Bewegens des Verschlusselements in eine Endlage, insbesondere die erste Endlage, elastisch verformbar sein kann, um das Verschlusselement dadurch zu einer von der anderen Endlage, insbesondere der zweiten Endlage, weg gerichteten Bewegung vorzuspannen und etwaige thermische Ausdehnungen und/oder Verkürzungen des Ventils ausgleichen zu können. Beispielsweise kann ein solches Kompensationselement durch einen aus einem Gummi oder Kunststoff gefertigten Abschnitt des Verschlusselements und/oder durch eine Feder gebildet sein.

Ein Verbindungsabschnitt, an dem das Kompensationselement bei manchen Ausführungsformen angeordnet sein kann, kann beispielsweise ein mit dem Verschlusselement verbundener Abschnitt sein, welcher gemeinsam mit dem Verschlusselement relativ zu dem Gehäuse des Ventils oder Ejektors bewegbar sein kann. Beispielsweise kann der Verbindungsabschnitt einen Stößel umfassen, der zwischen dem Verschlusselement und dem Antrieb angeordnet ist und eine Kraft von dem Antrieb auf das Verschlusselement überträgt. Auch durch eine Anordnung des Kompensationselements an einem solchen Abschnitt kann das Kompensationselement somit in einem Kraftübertragungspfad von dem Gehäuse zu dem Verschlusselement angeordnet sein, um etwaige mechanische Spannungen ausgleichen zu können.

Das Ventil oder der Ejektor kann bei einigen Ausführungsformen einen Spindeltrieb zum Antreiben des Verschlusselements umfassen, der eine zu einer Drehbewegung antreibbare Spindelmutter oder Spindel aufweist, wobei die Spindelmutter oder Spindel, insbesondere über ein Lager (vorzugsweise ein Wälzlager), durch das Kompensationselement an dem Gehäuse abgestützt sein kann. Insbesondere kann die Spindelmutter oder Spindel durch den Antrieb lediglich zu einer Drehbewegung, nicht jedoch zu einer axialen Bewegung antreibbar sein. Wenn das Verschlusselement mit einer drehfest, jedoch axial verschieblich gelagerten Spindel verbunden ist, kann durch einen Gewindeeingriff der rotierenden Spindelmutter mit der Spindel das Verschlusselement in axialer Richtung angetrieben werden. Wenn - bei anderen Ausführungsformen - das Verschlusselement mit einer drehfest, jedoch axial verschieblich gelagerten Spindelmutter verbunden ist, kann durch einen Gewindeeingriff der rotierenden Spindel mit der Spindelmutter das Verschlusselement in axialer Richtung angetrieben werden.

Insbesondere können bei solchen Ausführungsformen auf das Verschlusselement übertragene axiale Kräfte auf die Spindelmutter oder Spindel übertragbar sein, so dass das Kompensationselement in einem Kraftübertragungspfad von dem Gehäuse auf das Verschlusselement angeordnet und auch das Verschlusselement über das Kompensationselement an dem Gehäuse abgestützt sein kann. Ferner kann wiederum insbesondere eine direkte oder indirekte Abstützung der Spindelmutter oder Spindel vorgesehen sein.

Die Spindelmutter oder Spindel kann beispielsweise über eine Antriebswelle angetrieben werden. Die Antriebswelle kann beispielsweise eine Motorwelle eines Motors des Antriebs bilden.

Die antreibbare Spindelmutter oder Spindel kann, insbesondere über ein Lager, durch das Kompensationselement in Richtung der ersten Endlage vorgespannt sein. Insbesondere kann die Spindelmutter oder Spindel bei einigen Ausführungsformen durch das Kompensationselement in Richtung der ersten Endlage vorgespannt sein, wenn das Verschlusselement in der ersten Endlage positioniert ist. Wie vorstehend erläutert, kann dadurch auch das Verschlusselement in Richtung einer auf die Durchflussöffnung zu gerichteten Bewegung vorgespannt sein, wenn das Verschlusselement in der ersten Endlage positioniert ist, um sowohl thermisch bedingte Ausdehnungen als auch Verkürzungen des Gehäuses ausgleichen zu können.

Bei einigen Ausführungsformen können die antreibbare Spindelmutter oder Spindel einerseits und eine Antriebswelle andererseits starr miteinander verbunden sein, wobei die Antriebswelle relativ zu einem zugeordneten Antrieb axial beweglich ist. Beispielsweise kann die Antriebswelle durch einen Rotor eines Elektromotors gebildet sein, der relativ zu einem zugeordneten Stator des Elektromotors axial beweglich ist; oder die Antriebswelle kann mit einem Rotor eines Elektromotors drehfest, jedoch axial beweglich verbunden sein. Grundsätzlich genügt eine geringfügige axiale Beweglichkeit der Antriebswelle. Die antreibbare Spindelmutter oder Spindel einerseits und die Antriebswelle andererseits können bei anderen Ausführungsformen drehfest, jedoch relativ zueinander axial verschieblich miteinander verbunden sein. Insbesondere kann die Spindelmutter oder Spindel bei solchen Ausführungsformen axial relativ zu einer bezüglich des Gehäuses axial fixierten Antriebswelle beweglich sein. Ferner kann insbesondere auch ein Lager der Spindelmutter oder Spindel axial relativ zu der Antriebswelle beweglich angeordnet sein. Eine solche axial bewegliche Verbindung kann insbesondere eine Bewegung des Verschlusselements unter Umgehung des Antriebs - durch elastisches Verformen des Kompensationselements - ermöglichen, um Verkürzungen oder Ausdehnungen des Gehäuses ausgleichen zu können, wobei jedoch aufgrund der stets drehfesten Kopplung der Spindelmutter oder der Spindel mit dem Antrieb zu jeder Zeit auch eine gezielte Bewegung des Verschlusselements durch den Antrieb möglich ist.

Bei einigen Ausführungsformen kann das Ventil oder der Ejektor einen Motor, insbesondere einen Schrittmotor umfassen, durch welchen eine Antriebswelle antreibbar ist.

Das Kompensationselement kann ferner bei einigen Ausführungsformen als eine Feder, insbesondere eine Tellerfeder, ausgebildet sein. Insbesondere kann es eine Tellerfeder als Kompensationselement ermöglichen, verhältnismäßig große Kräfte bei einem geringen Federweg aufzunehmen, so dass geringfügige Ausdehnungen und/oder Verkürzungen des Ventils oder Ejektors durch eine solche Tellerfeder zuverlässig mechanisch kompensiert werden können.

Ferner kann das Ventil oder der Ejektor bei einigen Ausführungsformen einen steuerbaren Antrieb für das Verschlusselement aufweisen und das Ventil oder der Ejektor kann mit einer Steuereinrichtung verbunden sein, welche dazu ausgebildet ist, das Verschlusselement gemäß einem der vorstehend erläuterten Verfahren zu positionieren. Bei solchen Ausführungsformen kann somit insbesondere vorgesehen sein, zusätzlich zu der beschriebenen mechanischen Kompensation von Ausdehnungen und/oder Verkürzungen auch eine steuerungstechnische Kompensation durch das erläuterte Positionierverfahren vorzunehmen.

Die Erfindung bezieht sich ferner auf ein Ventil- und/oder Ejektorsystem, welches ein Ventil oder einen Ejektor sowie ein zwischen einer ersten Endlage und einer zweiten Endlage bewegbares Verschlusselement umfasst, wobei das Verschlusselement einen Durchfluss von Fluid oder Gas durch eine Durchflussöffnung des Ventils oder Ejektors in der ersten Endlage blockiert und die Durchflussöffnung in der zweiten Endlage für einen Durchfluss des Fluids oder Gases freigibt. Zudem umfasst das System einen Antrieb, insbesondere einen elektrischen Antrieb, zum Bewegen des Verschlusselements und eine Steuereinrichtung, welche dazu eingerichtet ist, das Verschlusselement gemäß einem Verfahren der hierin beschriebenen Art zu positionieren.

Insbesondere kann die Steuereinrichtung dazu vorgesehen sein, den Antrieb zum Bewegen des Verschlusselements derart anzusteuern, dass das Verschlusselement gemäß einem Verfahren der hierin beschriebenen Art positioniert wird. Die Steuereinrichtung kann dabei unmittelbar für das Ventil oder den Ejektor vorgesehen oder Teil einer Steuereinrichtung einer Vorrichtung sein, in welcher das Ventil oder der Ejektor verbaut ist. Beispielsweise kann die Steuereinrichtung Teil einer Steuereinrichtung einer Kälteanlage, einer Wärmeanlage oder eines Kühlmöbels sein oder von einer solchen Steuereinrichtung gebildet sein, um etwa Verschlusselemente von in einer Kälteanlage verbauten Ventile oder Ejektoren gemäß dem erläuterten Verfahren positioniert werden können. Die Steuereinrichtung kann eine CPU (Central Processing Unit) und/oder einen Mikrocontroller umfassen.

Indem die Steuereinrichtung zum Positionieren des Verschlusselements gemäß dem erläuterten Verfahren ausgebildet ist, können thermisch bedingte Ausdehnungen oder Verkürzungen des Ventils oder Ejektors des Ventil- und/oder Ejektorsystems ausgeglichen werden, während die Durchflussöffnung des Ventils oder Ejektors durch das Verschlusselement verschlossen ist. Hierdurch kann beispielsweise sichergestellt werden, dass die Durchflussöffnung trotz etwaiger thermischer Ausdehnungen des Ventils oder Ejektors zuverlässig verschlossen oder freigegeben bleibt, andererseits jedoch etwaige sich aufbauende thermische Spannungen nicht zu einem Verkeilen oder Verklemmen des Verschlusselements führen und die Durchflussöffnung zuverlässig geöffnet oder geschlossen werden kann. Zudem können etwaige Fehlpositionierung des Verschlusselements in der einen Endlage ausgeglichen werden.

Bei einigen Ausführungsformen kann der Antrieb einen Schrittmotor umfassen. Beispielsweise kann der Schrittmotor Teil eines Spindeltriebs sein, dessen Spindel oder Spindelmutter mit dem Verschlusselement verbunden ist. Das Verschlusselement kann ferner insbesondere translatorisch zwischen der ersten Endlage und der zweiten Endlage bewegbar sein.

Ferner kann das Verschlusselement bei einigen Ausführungsformen als Ventilnadel ausgebildet sein. Beispielsweise kann das Verschlusselement dazu vorgesehen sein, einen Ventilsitz eines Sitzventils oder eines Ejektors wahlweise zu verschließen oder freizugeben.

Bei einigen Ausführungsformen kann das zumindest eine Ventil und/oder der zumindest eine Ejektor ferner nach einer der vorstehend erläuterten Ausführungsformen eines Ventils oder Ejektors ausgebildet sein, welches oder welcher ein elastisch verformbares Kompensationselement aufweist, welches in einem Kraftübertragungspfad von einem Gehäuse des Ventils zu dem Verschlusselement angeordnet ist. Das Ventil- und/oder Ejektorsystem kann somit bei einigen Ausführungsformen zumindest ein Ventil und/oder zumindest einen Ejektor nach einer dieser Ausführungsformen umfassen.

Die Erfindung bezieht sich zudem auf eine Kälteanlage, ein Kühlmöbel oder eine Wärmeanlage mit einem Ventil- oder einem Ejektorsystem der vorstehend erläuterten Art und/oder mit einem Ventil und/oder einem Ejektor nach einer der vorstehend erläuterten Ausführungsformen, bei welchen ein elastisch verformbares Kompensationselement vorgesehen ist.

Bei einer Kälteanlage, einem Kühlmöbel oder einer Wärmeanlage kann insbesondere ein Kälte- oder Wärmekreislauf vorgesehen sein, wobei beispielsweise ein flüssiges Kühlmittel einem Verdampfer zugeführt werden kann, um der Umgebung die zum Verdampfen des Kühlmittels erforderliche Wärme zu entziehen. Das verdampfte Kühlmittel kann daraufhin einem Verdichter zugeführt und verdichtet werden, um in einem Verflüssiger zu kondensieren und dabei Wärme abzugeben. Das verflüssigte Kühlmittel kann erneut dem Verdampfer zugeführt werden. Ferner kann ein Expansionsventil zwischen dem Verflüssiger und dem Verdampfer geschaltet sein, um den Druck des zugeführten flüssigen Kältemittels zu verringern. Ein Ejektor kann in einem solchen Kreislauf beispielsweise dazu vorgesehen sein, nicht verdampftes Kühlmittel anzusaugen und eine Vorverdichtung vorzunehmen, um dadurch den Verdichter zu entlasten. In Abhängigkeit von der Anordnung des Verdampfers und des Kondensators kann ein solcher Kreislauf insbesondere bei einer Kälte- oder einer Wärmeanlage zum Einsatz kommen. Zudem kann ein derartiger Kältekreislauf beispielsweise in Kühlmöbeln, etwa einem Kühlschrank, eingesetzt werden.

Eine Kälteanlage mit einem Kältekreislauf, der einen Ejektor und mehrere Ventile umfasst, ist beispielsweise in DE 10 2016 123 277 A1 beschrieben, deren Inhalt im Hinblick auf die Gestaltung eines solchen Kältekreislaufs, die Ausbildung eines Ejektors und einer Kälte- /Wärmeanlage explizit in die vorliegende Offenbarung einbezogen wird.

Grundsätzlich können in Kälte- oder Wärmekreisläufen eine Vielzahl von Ventilen oder Ejektoren mit jeweiligen Verschlusselementen vorgesehen sein, um den Betrieb des Verdampfers, des Verdichters, des Kondensators oder des Expansionsventils beeinflussen und/oder den Betrieb gegebenenfalls anhalten zu können. Zudem können sich gerade in solchen Kreisläufen bzw. den entsprechenden Anlagen verhältnismäßig große Temperaturunterschiede zwischen einzelnen Abschnitten einstellen, die zu den erläuterten thermischen Spannungen führen können. Auch eine sich ändernde Umgebungstemperatur kann solche Spannungen zur Folge haben. Das hierin offenbarte Ventil- und/oder Ejektorsystem und/oder das hierin offenbarte Ventil oder der hierin offenbarte Ejektor mit einer mechanischen Kompensation thermischer Spannungen eignen sich daher insbesondere zum Einsatz in solchen Kälteanlagen, Kühlmöbeln oder Wärmeanlagen, um solche Spannungen ausgleichen und einen zuverlässigen Betrieb erreichen zu können.

Die Erfindung bezieht sich daher auch auf die Verwendung eines Ventil- und/oder Ejektorsystems der vorstehend erläuterten Art und/oder eines Ventils oder Ejektors nach einer der vorstehend erläuterten Ausführungsformen mit einem elastisch verformbaren Kompensationselement in einer Kälteanlage, in einem Kühlmöbel oder in einer Wärmeanlage.

Die Erfindung wird im Folgenden rein beispielhaft anhand von Ausführungsbeispielen unter Bezugnahme auf die Zeichnungen erläutert. Es zeigen:
- Fig. 1A bis 1D: eine jeweilige schematische Darstellung eines Ventils mit einem zwischen einer ersten Endlage und einer zweiten Endlage bewegbaren Verschlusselement in der zweiten Endlage, einer Zwischenstellung, einer Sperrstellung bzw. der ersten Endlage,
- Fig. 2A und 2B: eine schematische Darstellung eines Ejektors mit einem zwischen einer ersten Endlage und einer zweiten Endlage bewegbaren Verschlusselement in der zweiten Endlage bzw. der ersten Endlage,
- Fig. 3: ein Blockdiagramm zur Veranschaulichung eines Verfahrens zum Positionieren eines Verschlusselements eines Ventils oder Ejektors,
- Fig. 4A bis 4C: schematische Darstellungen eines Ventils zur Veranschaulichung eines Ausgleichens einer Verkürzung des Ventils aufgrund thermischer Spannungen durch Anwenden des Verfahrens,
- Fig. 5A bis 5D: schematische Darstellungen eines Ventils zur Veranschaulichung eines Ausgleichens von Ausdehnungen des Ventils infolge thermischer Spannungen durch Anwenden des Verfahrens,
- Fig. 6: eine schematische Darstellung einer Kälteanlage mit einem Ventil- und/oder Ejektorsystem, bei welchem Verschlusselemente eines Ejektors und mehrerer Ventile des Ventil- und/oder Ejektorsystem gemäß dem beschriebenen Verfahren positionierbar sind,
- Fig. 7A bis 7C: schematische Darstellungen eines Ventils mit einem zwischen einer ersten Endlage und einer zweiten Endlage bewegbaren Verschlusselement, bei welchem in einem Kraftübertragungspfad von einem Gehäuse des Ventils zu dem Verschlusselement ein elastisch verformbares Kompensationselement angeordnet ist, zur Veranschaulichung einer mechanischen Kompensation von Ausdehnungen und Verkürzungen des Gehäuses, wenn das Verschlusselement in der ersten Endlage positioniert ist, und
- Fig. 8A bis 8C: schematische Darstellungen einer weiteren Ausführungsform eines Ventils mit einem elastisch verformbaren Kompensationselement, welches in einem Kraftübertragungspfad von einem Gehäuse des Ventils zu einem Verschlusselement angeordnet ist.

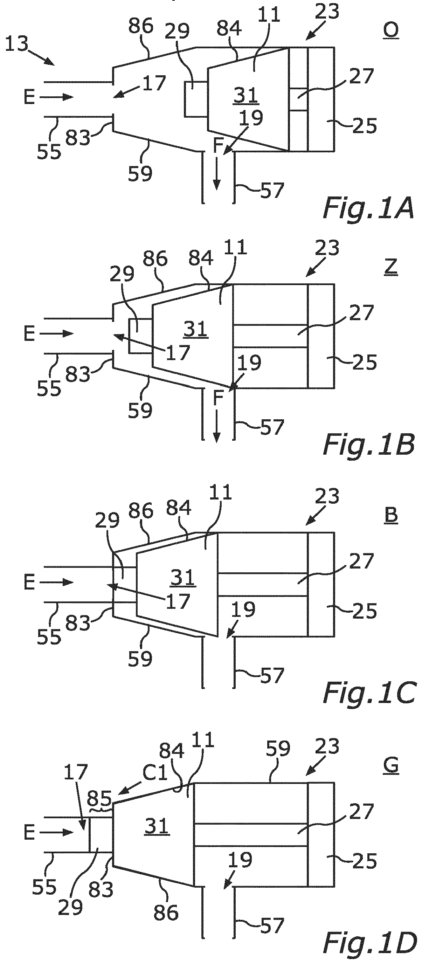

Die Fig. 1A bis 1D zeigen schematisch ein Ventil 13, welches einen Eingang 55 und einen Ausgang 57 aufweist, so dass ein Eingangsstrom E eines Fluids oder Gases durch den Eingang 55 einströmen und das Ventil 13 als ein Ausgangsstrom F durch den Ausgang 57 verlassen kann. Dabei tritt der Eingangsstrom E von Fluid oder Gas durch eine Durchflussöffnung 17 in ein Gehäuse 59 ein, welchen der Ausgangsstrom F durch eine Ausgangsöffnung 19 des Ausgangs 57 verlässt. Bei der gezeigten Ausführungsform ändert der Eingangsstrom E dabei innerhalb des Gehäuses 59 seine Richtung, so dass der Ausgangsstrom F senkrecht zu dem Eingangsstrom E ausgerichtet ist. Dies ist jedoch nicht zwingend, vielmehr kann eine Umlenkung innerhalb eines Ventils 13 grundsätzlich um einen beliebigen Winkel erfolgen oder ein Eingangsfluss E kann geradlinig durch ein Ventil 13 hindurch geführt werden. Ferner kann ein Ventil 13 auch mehr als einen Eingang 55 und/oder mehr als einen Ausgang 57 aufweisen.

Um den Strom von Fluid oder Gas durch das Gehäuse 59 regulieren zu können weist das Ventil 13 ferner ein zwischen einer in Fig. 1A gezeigten zweiten Endlage O, die auch als Offenstellung bezeichnet werden kann, und einer in Fig. 1D gezeigten ersten Endlage G, die auch als Geschlossenstellung bezeichnet werden kann, bewegbares Verschlusselement 11 sowie einen Antrieb 23 zum Bewegen des Verschlusselements 11 auf. Das Verschlusselement 31 ist bei der schematisch gezeigten Ausführungsform translatorisch zwischen der zweiten Endlage O und der ersten Endlage G bewegbar und als Ventilnadel 31 ausgebildet, welche zur Veranschaulichung der Funktionsweise mit einem Fortsatz 29 dargestellt ist. Zum Antreiben des Verschlusselements 11 weist der Antrieb 23 einen elektrischen Motor 25 auf, welcher einen Stator und einen Rotor aufweisen kann (nicht gezeigt) und bei welchem es sich insbesondere um einen Schrittmotor handeln kann. Der Motor 25 ist über eine (hier lediglich vereinfacht dargestellte) Spindel 27 mit dem Verschlusselement 11 verbunden, wobei eine Rotation einer Motorwelle des Motors 25 in eine translatorische (axiale) Bewegung des Verschlusselements 11 überführt werden kann.

In der in Fig. 1A gezeigten zweiten Endlage O befindet sich das Verschlusselement 11 maximal von der Durchflussöffnung 17 entfernt und die Durchflussöffnung 17 ist für einen Durchfluss von Fluid oder Gas freigegeben. Daher kann der Eingangsstrom E in das Gehäuse 59 eintreten und diesen als Ausgangsstrom F durch die Ausgangsöffnung 19 und den Ausgang 57 verlassen.

Ausgehend von der zweiten Endlage O kann das Verschlusselement 11 jedoch durch den Antrieb 23 auf die Durchflussöffnung 17 zu und in verschiedene Zwischenstellungen Z verfahren werden, um den Fluss von Fluid oder Gas durch das Ventil 13 zu regulieren. Fig. 1B zeigt eine solche Zwischenstellung Z, in welcher die Durchflussöffnung 17 zwar nach wie vor freigegeben ist und der Eingangsstrom E in das Gehäuse 59 eintreten kann, das Verschlusselement 11 jedoch den für den Eintritt von Fluid oder Gas zur Verfügung stehenden Raum bereits begrenzt. Durch Bewegen des Verschlusselements 11 in die Zwischenstellung Z kann eine Stärke des Ausgangsstroms F daher gegenüber einer Positionierung des Verschlusselements 11 in der zweiten Endlage O verringert werden, wobei diese Stärke durch zunehmendes Bewegen des Verschlusselements 11 auf die Durchflussöffnung 17 zu weiter verringert werden kann.

Durch weiteres Bewegen des Verschlusselements 11 in Richtung der Durchflussöffnung 17 kann das Verschlusselement 11 zudem in eine in Fig. 1C veranschaulichte Sperrstellung B bewegt werden, in welcher der Fortsatz 29 die Durchflussöffnung 17 überdeckt und dadurch ein Eintreten des Eingangsstroms E in das Gehäuse 59 verhindert. Bereits in dieser Stellung des Verschlusselements 11 ist die Durchflussöffnung 17 somit blockiert und gegen ein Eindringen des Eingangsstroms E verschlossen, so dass ein Durchfluss von Fluid oder Gas in der Sperrstellung B gesperrt ist und kein Ausgangsstrom F aus dem Ausgang 57 austritt.

Jedoch befindet sich das Verschlusselement 11 in der in Fig. 1C gezeigten Sperrstellung B noch nicht in einer Endlage bezüglich einer Bewegung in Richtung der Durchflussöffnung 17, so dass das Verschlusselement 11 noch weiter bis in eine in Fig. 1D gezeigte erste Endlage G bewegt werden kann, in welcher die Durchflussöffnung 17 vollständig von dem Verschlusselement 11 verschlossen ist. Insbesondere liegt das Verschlusselement 11 in der ersten Endlage G an einer Begrenzung 83 der Durchflussöffnung 17 an, wobei das Verschlusselement 11 infolge des Bewegens in die erste Endlage G eine erste Schließkraft C1 auf die Begrenzung 83 ausüben und die Durchflussöffnung 17 mit der ersten Schließkraft C1 verschließen kann. Bei der Begrenzung 83 kann es sich insbesondere um eine Dichtung der Durchflussöffnung 17 handeln, wobei eine solche Dichtung durch das Bewegen des Verschlusselements 11 in die erste Endlage G und das Ausüben der ersten Schließkraft C1 insbesondere verformt werden kann.

In den vorliegenden schematischen Darstellungen ist das Verschlusselement 11 beispielhaft mit dem Fortsatz 29 dargestellt, um die einzelnen Stellungen des Verschlusselements 11 und insbesondere die Sperrstellung B als eine die Durchflussöffnung 17 bereits blockierende Stellung und die erste Endlage G als eine Endlage der Bewegung des Verschlusselements 11 veranschaulichen zu können. Jedoch kann es bei Ventilen 13 vorgesehen sein, dass das Verschlusselement 11 keinen Fortsatz 29 aufweist und die erste Endlage G und die Sperrstellung B vornehmlich durch eine jeweilige von dem Verschlusselement 11 auf eine Begrenzung 83 oder eine Dichtung der Durchflussöffnung 17 ausgeübte Kraft definiert sind.

Zudem kann die Durchflussöffnung 17 in der ersten Endlage G auch durch ein Anliegen von Kegelflächen 84 des Verschlusselements 11 an entsprechend geformten Innenflächen 86 des Gehäuses 59 gegen einen Durchfluss von Fluid oder Gas blockiert sein, so dass bei Ventilen 13 nicht zwangsläufig ein axialer Anschlag für das Verschlusselement 11 vorgesehen sein muss, sondern die Durchflussöffnung 17 auch allein durch das Anliegen der Kegelflächen 84 an den Innenflächen 86 blockiert sein kann. Auch bei solchen Ausführungsformen wird eine Weiterbewegung des Verschlusselements 11 jedoch durch das Anliegen der Kegelflächen 84 an den Innenflächen 86 unterbunden.

Die Sperrstellung B kann daher allgemein durch diejenige Stellung des Verschlusselements 11 definiert sein, bei welcher die Durchflussöffnung 17 gerade gegen einen Durchfluss von Fluid oder Gas blockiert ist und kein Ausgangsstrom F aus dem Ventil 13 herausdringt. Die erste Endlage G kann hingegen durch diejenige Stellung definiert sein, bei welcher das Verschlusselement 11 eine erste Schließkraft C1 auf die Begrenzungen 83 oder Dichtungen der Durchflussöffnung 17 ausübt, welche einer von dem Antrieb 23 zum Bewegen des Verschlusselements 11 in die erste Endlage G übertragbaren Kraft entspricht. Die erste Endlage G und die Sperrstellung B definieren ferner einen Sperrbereich 85 des Ventils 13, wobei kein Fluid oder Gas durch die Durchflussöffnung 17 in das Gehäuse 59 eintritt, wenn das Verschlusselement 11 in dem Sperrbereich 85 positioniert ist.

Der Motor 25 kann bei einigen Ausführungsformen als Schrittmotor ausgeführt sein und der Motor kann zum Bewegen des Verschlusselements 11 in die erste Endlage G derart angesteuert werden kann, dass der Motor 25 nach dem Erreichen der ersten Endlage G noch zum Ausführen weiterer Schritte angesteuert wird und Schrittverluste erfährt. Durch eine solche Ansteuerung kann sichergestellt werden, dass das Verschlusselement 11 tatsächlich die erste Endlage G erreicht. Ferner kann beispielsweise ein Motorstrom des Motors 25 und damit die von dem Antrieb 23 auf das Verschlusselement 11 übertragbare Kraft einstellbar sein, so dass die erste Schließkraft C1, mit welcher das Verschlusselement 11 die Durchflussöffnung 17 in der ersten Endlage G verschließt, als die von dem Motor 25 übertragbare Kraft einstellbar sein kann. Zudem kann auch die absolute Position der ersten Endlage G von der eingestellten, durch den Antrieb 23 übertragbaren Kraft abhängen, da beispielsweise bei Einstellen einer größeren Kraft nach Auftreffen auf eine Dichtung der Durchflussöffnung 17 etwa noch ein Schritt ausgeführt und die Dichtung weiter komprimiert werden kann, wohingegen bei Einstellen einer geringeren Kraft dieser Schritt nicht mehr ausgeführt werden kann und die erste Endlage G bereits einen Schritt zuvor erreicht ist.

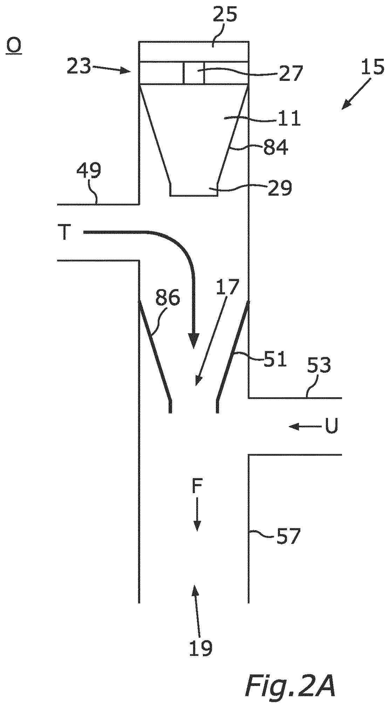

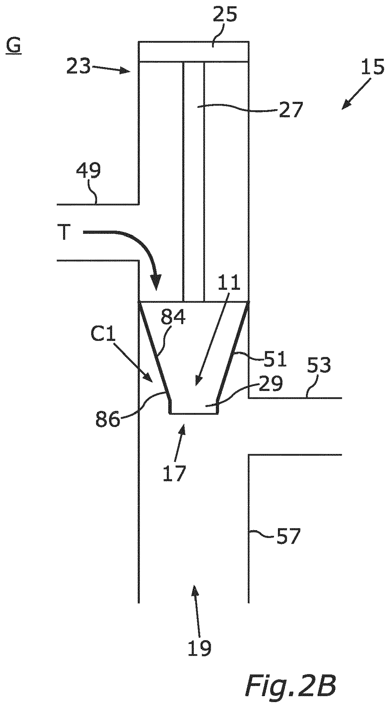

Die Fig. 2A und 2B veranschaulichen ferner schematisch einen Ejektor 15, welcher ebenfalls ein translatorisch zwischen einer zweiten Endlage O und einer ersten Endlage G bewegbares Verschlusselement 11 sowie einen Antrieb 23 zum Bewegen des Verschlusselements 11 aufweist. Wiederum weist der Antrieb 23 einen Motor 25 auf, welcher beispielhaft über eine Spindel 27 mit dem Verschlusselement 11 verbunden ist, um das Verschlusselement 11 translatorisch bewegen zu können. Veranschaulichend ist das Verschlusselement 11 erneut mit einem Fortsatz 29 gezeigt, wobei ein solcher Fortsatz 29 jedoch nicht zwangsläufig vorgesehen sein muss.

Der Ejektor 15 weist einen Treibanschluss 49 auf, durch welchen ein Treibstrom T in den Ejektor 15 eintreten kann. Der Treibstrom T wird durch eine Treibdüse 51 geführt und dadurch beschleunigt, um die Treibdüse 51 durch eine Durchflussöffnung 17 zu verlassen. Durch den aufgrund der Beschleunigung des Treibstroms T entstehenden Unterdruck wird durch einen Sauganschluss 53 ein Saugstrom U eines Saugmediums angesaugt, so dass der Treibstrom T und der Saugstrom U den Ejektor 15 als Ausgangsstrom F durch einen Ausgang 57 und eine Ausgangsöffnung 19 des Ejektors 15 verlassen.

In der in Fig. 2A gezeigten zweiten Endlage O des Verschlusselements 11 ist die Durchflussöffnung 17 für einen Durchfluss von Fluid oder Gas und insbesondere des Treibstroms T freigegeben. Wie Fig. 2B zeigt, kann die Durchflussöffnung 17 jedoch durch Bewegen des Verschlusselements 11 in die erste Endlage G mit einer ersten Schließkraft C1 verschlossen werden, so dass der Treibstrom T nicht durch die Durchflussöffnung 17 strömen kann. Aufgrund des fehlenden Unterdrucks wird auch der Saugstrom U nicht angesaugt und es verlässt kein Ausgangsstrom F den Ejektor 15, so dass der Ausgangsstrom F letztlich, wie bereits anhand der Fig. 1A bis 1D für das Ventil 13 erläutert, durch Positionieren des Verschlusselements 11 beeinflusst und insbesondere unterbunden werden kann.

In der ersten Endlage G liegen insbesondere Kegelflächen 84 des Verschlusselements 15 an entsprechend geformten Innenflächen 86 der Treibdüse 51 an, um die Durchflussöffnung 17 dadurch gegen einen Durchfluss von Fluid oder Gas zu blockieren, so dass bei dem Ejektor 15 kein axialer Endanschlag oder eine umfängliche Begrenzung 83 der Durchflussöffnung 17 vorgesehen ist, an welcher das Verschlusselement 15 in der ersten Endlage G axial anschlägt. Gleichwohl kann das Verschlusselement 15 infolge der Bewegung in die erste Endlage G an den Innenflächen 86 der Treibdüse 51 anschlagen, so dass eine weitergehende Bewegung von der zweiten Endlage O weg aufgrund dieses Anschlagens blockiert und die erste Endlage G erneut als eine Lage des Verschlusselements 15 definiert sein kann, in welcher eine von dem Antrieb 23 auf das Verschlusselement 15 übertragene Kraft kompensiert und eine Weiterbewegung von der zweiten Endlage O weg unterbunden ist.

Zusammenfassend kann bei dem Ejektor 15 oder dem Ventil 13 somit ein zwischen einer zweiten Endlage O und einer ersten Endlage G bewegbares Verschlusselement 11 vorgesehen sein, um einen Durchfluss von Fluid oder Gas durch eine jeweilige Durchflussöffnung 17 zu regulieren und insbesondere wahlweise freigeben oder blockieren zu können, wobei in der ersten Endlage G ein Fluss durch das Ventil 13 oder den Ejektor 15 blockiert ist und kein Ausgangsstrom F das Ventil 13 oder den Ejektor 15 verlässt. In der ersten Endlage G des Verschlusselements 11 unterbleibt daher ein Massestrom durch das Ventil 13 oder den Ejektor 15, wobei dieser ausbleibende Massenstrom jedoch zu thermischen Veränderungen von Komponenten des Ventils 13 oder des Ejektors 15 führen kann, welche sich in auf das Verschlusselement 11 und/oder das Gehäuse 59 wirkenden thermischen Spannungen niederschlagen können. Insbesondere können diese Spannungen dabei aufgrund unterschiedlicher Wärmeausdehnungskoeffizienten einzelner Komponenten des Ventils 13 oder des Ejektors 15 entstehen, wenn sich das Ventil 13 oder der Ejektor 15 aufgrund des ausbleibenden Massestroms abkühlt oder erwärmt.

So kann beispielsweise ein Ausbleiben eines Durchflusses von warmem Medium dazu führen, dass sich das Ventil 13 oder der Ejektor 15, insbesondere das Gehäuse 59 des Ventils 13 oder Ejektors 15, infolge eines Abkühlens verkürzt und eine Spannungskraft auf das Verschlusselement 11 überträgt. Aufgrund solcher Spannungen kann das Verschlusselement 11 jedoch gegebenenfalls in der ersten Endlage G verklemmen, so dass das Verschlusselement 11 nicht mehr aus der ersten Endlage G gelöst werden kann, um in eine Zwischenstellung Z oder die zweite Endlage O bewegt zu werden und zu einem späteren Zeitpunkt einen Durchfluss von Fluid oder Gas zu ermöglichen. Umgekehrt kann ein ausbleibender Massestrom jedoch auch eine Ausdehnung des Ventils 13 oder des Ejektors 15 oder des jeweiligen Gehäuses 59 zur Folge haben, aufgrund derer sich die von dem Verschlusselement 11 ausgeübte Schließkraft C1 reduzieren kann, was gegebenenfalls zu einer ungewollten Leckage führen kann. Ferner können auch nach einem Bewegen des Verschlusselements 11 in die zweite Endlage O gegebenenfalls Spannungen auftreten, die das Verschlusselement 11 verklemmen, so dass das Verschlusselement 11 gegebenenfalls nicht mehr zum Schließen der Durchflussöffnung 17 in die erste Endlage G bewegt und das Ventil 13 oder der Ejektor 15 nicht mehr betätigt werden können.

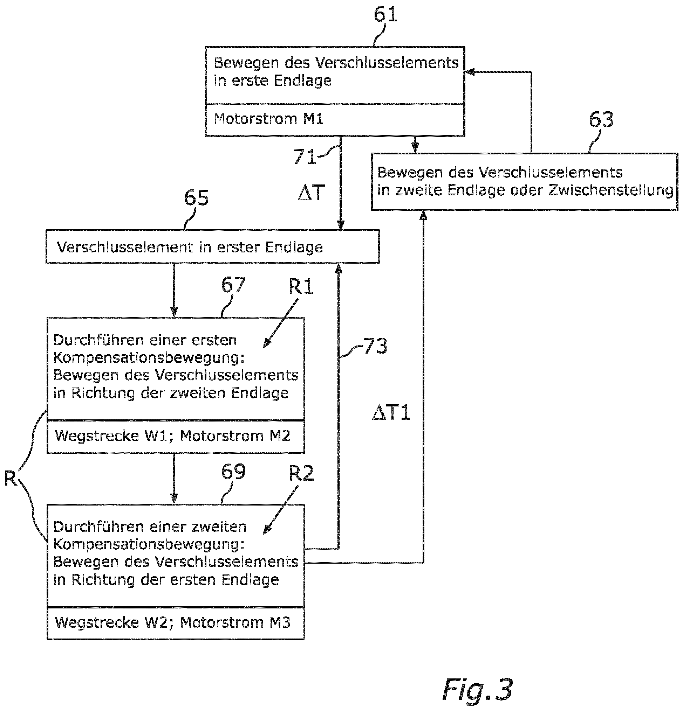

Um solche mechanischen Spannungen jedoch auszugleichen und ein zuverlässiges Verschließen der jeweiligen Durchflussöffnung 17 des Ventils 13 oder Ejektors 15 erreichen zu können, nachdem das Verschlusselement 11 in die erste Endlage G verfahren wurde, kann jedoch vorgesehen sein, das Verschlusselement 11 gemäß einem anhand von Fig. 3 veranschaulichten Verfahren zu positionieren. Zudem kann das Verfahren in analoger Weise nach einem Bewegen des Verschlusselements 11 in die zweite Endlage O angewandt werden, um ein Verklemmen des Verschlusselements 11 zu verhindern und einen Abbau von Spannungskräften zu ermöglichen.

Bei dem hierin beschriebenen Verfahren wird das Verschlusselement 11 zunächst in die erste Endlage G oder die zweite Endlage O bewegt, in dem Verfahren gemäß Fig. 3 beispielhaft in die erste Endlage G, so dass die Durchflussöffnung 17 verschlossen und ein Fluss von Gas oder Fluid durch die Durchflussöffnung 17 blockiert wird. Zu diesem Bewegen des Verschlusselements 11 in die erste Endlage G kann der Motor 25 insbesondere mit einem ersten Motorstrom M1 betrieben werden, um die Durchflussöffnung 17 mit der bereits erwähnten ersten Schließkraft C1 zu verschließen. Gegebenenfalls kann das Ventil 13 oder der Ejektor 15 danach in einem Schritt 63 geöffnet werden, indem das Verschlusselement 11 in eine Zwischenstellung Z oder die zweite Endlage O verfahren wird. Ausgehend davon kann der Schritt 61 gegebenenfalls wiederholt und das Verschlusselement 11 in die erste Endlage G verfahren werden.

Wird das Verschlusselement 11 jedoch nicht innerhalb einer Wartezeit ΔT, beispielsweise einer Wartezeit von 10 Sekunden, aus der ersten Endlage G herausbewegt, kann nach der Wartezeit ΔT in einem Schritt 71 geprüft werden, ob sich das Verschlusselement 11 noch in der ersten Endlage G befindet und diese Positionierung in einem Schritt 65 erkannt werden. Dies kann insbesondere erfolgen, indem während der Wartezeit ΔT kein Befehl zum Bewegen des Verschlusselements 11 erfasst wird. Befindet sich das Verschlusselement 11 somit nach der Wartezeit ΔT noch in der ersten Endlage G bzw. ist die Durchflussöffnung 17 noch verschlossen, kann in Schritten 67 und 69 ein Kompensationszyklus R durchgeführt werden, während dessen das Verschlusselement 11 zum Ausführen einer ersten Kompensationsbewegung R1 in Richtung der zweiten Endlage O und somit der im Vergleich zu der ersten Endlage G anderen Endlage O sowie zum Ausführen einer zweiten Kompensationsbewegung R2 in Richtung der ersten Endlage G und somit der einen Endlage G, in welche das Verschlusselement 11 ursprünglich bewegt wurde, angesteuert wird.

Insbesondere wird das Verschlusselement beispielhaft in dem Schritt 67 zunächst zum Ausführen der ersten Kompensationsbewegung R1 in Richtung der zweiten Endlage O angesteuert, wobei das Verschlusselement 11 insbesondere um eine erste Wegstrecke W1 in Richtung der zweiten Endlage O bewegt werden kann. Diese erste Kompensationsbewegung R1 ermöglicht es dem Ventil 13 oder dem Ejektor 15, eine gegebenenfalls aufgebaute thermische Spannung durch Ausführen einer Verkürzung zu lösen. Der Motor 25 kann zudem zum Bewegen des Verschlusselements 11 in Richtung der ersten Endlage O mit einem Motorstrom M2 angesteuert werden, der insbesondere größer als der Motorstrom M1 sein kann. Dadurch kann erreicht werden, dass das Verschlusselement 11 auch bei etwaigen sich aufgrund von Verkürzungen des Ventils 13 oder des Ejektors 15 während der Wartezeit ΔT aufbauenden Spannungen aus der ersten Endlage G gelöst werden kann.

Nach dem Bewegen des Verschlusselements 11 um die Wegstrecke W1 in Richtung der zweiten Endlage O kann das Verschlusselement 11 in dem Schritt 69 zum Ausführen der zweiten Kompensationsbewegung R2 in Richtung der ersten Endlage G angesteuert werden. Insbesondere kann der Antrieb 23 dabei zum Bewegen des Verschlusselements 11 um eine zweite Strecke W2 in Richtung der ersten Endlage G angesteuert werden, wobei die zweite Wegstrecke W2 größer als die erste Wegstrecke W1 sein kann. Durch eine solche Wahl der Wegstrecke W2 kann erreicht werden, dass auch etwaige Ausdehnungen des Ventils 13 oder des Ejektors 15 ausgeglichen werden können, indem das Verschlusselement 11 solchen Ausdehnungen und einem dadurch bedingten Entfernen der Durchflussöffnung 17 gewissermaßen nachgeführt werden kann. Erfolgt hingegen eine Verkürzung des Ventils 13 oder des Ejektors 15, kann das Verschlusselement 11 nicht die gesamte zweite Wegstrecke W2 zurücklegen, sondern eine Motorwelle des Motors 25 blockiert bereits vor Zurücklegen der zweiten Wegstrecke W2. Zudem kann das Verschlusselement 11 durch eine solche Wahl der Wegstrecken W1 und W2 durch den Kompensationszyklus R zunehmend weiter in die mechanische erste Endlage G verfahren werden, wenn das Verschlusselement 11 die erste Endlage G beispielsweise während des Schritts 61 aufgrund von Schrittverlusten des Motors 25 nicht vollständig erreicht hat, so dass auch etwaige Fehlpositionierungen des Verschlusselements 11 ausgeglichen werden können.

Insbesondere können die erste Wegstrecke W1 und die zweite Wegstrecke W2 durch jeweilige Schrittzahlen S1 und S2 definiert sein, indem ein als Schrittmotor ausgebildeter Motor 25 zum Antreiben der ersten Kompensationsbewegung R1 in Richtung der zweiten Endlage O zum Durchführen einer ersten Anzahl von Schritten S1 und zum Antreiben der zweiten Kompensationsbewegung R2 in Richtung der ersten Endlage G zum Durchführen einer zweiten Anzahl von Schritten S2 angesteuert werden kann. Die zweite Schrittzahl S2 kann dabei größer sein als die erste Schrittzahl S1, insbesondere um genau einen Schritt, so dass durch Durchführen der Schritte 67 und 96 insbesondere Ausdehnungen des Ventils 13 oder des Ejektors 15 um die bei einem Schritt des Schrittmotors 25 zurückzulegende Wegstrecke des Verschlusselements 11 ausgleichen zu können. Beispielsweise kann vorgesehen sein, das Verschlusselement 11 um zwei Schritte in Richtung der zweiten Endlage O und um drei Schritte in Richtung der ersten Endlage G zu bewegen. Zudem kann das Verschlusselement 11 durch einen Schritt des Schrittmotors 25 um weniger als 10 µm, insbesondere um etwa 7 µm, bewegbar sein.

Grundsätzlich kann das Verschlusselement 11 durch den Schritt 69 wieder in die erste Endlage G bewegt werden. Es ist jedoch möglich, dass während der Wartezeit ΔT Ausdehnungen des Ventils 13 oder des Ejektors 15 auftreten, die durch das einmalige Durchführen des Kompensationszyklus R und der Schritte 67 und 69 nicht vollständig ausgeglichen werden können, so dass das Verschlusselement 11 in dem Schritt 69 nicht zwangsläufig wieder die erste Endlage G, in welcher die Durchflussöffnung 17 mit der von dem Antrieb 23 auf das Verschlusselement 11 übertragbaren Kraft verschlossen ist, erreicht. Dennoch können durch ein solches Nachführen des Verschlusselements 11 Ausdehnungen kompensiert und es kann erreicht werden, dass das Verschlusselement 11 zumindest in dem Sperrbereich 85 bleibt, um eine Leckage zu verhindern. Zudem können auch größere Ausdehnungen durch zyklisches Wiederholen der Schritte 67 und 69 vollständig ausgeglichen werden.

Das Verschlusselement 11 kann ferner in dem Schritt 69 mit einem dritten Motorstrom M3 in Richtung der ersten Endlage G und insbesondere bis in die erste Endlage G bewegt werden. Der Motorstrom M3 kann dabei insbesondere kleiner sein als der Motorstrom M1 und/oder beispielsweise 80% des Motorstroms M1 betragen, so dass die Durchflussöffnung 17 infolge des Schrittes 69 mit einer gegenüber der ersten Schließkraft C1 verringerten zweiten Schließkraft C2 verschlossen werden kann. Insbesondere können Belastungen auf Komponenten des Ventils 13 oder des Ejektors 15 infolge der Bewegungen des Verschlusselements 11 durch Verringern der Schließkraft minimiert werden und es kann zudem eine klarer definierte und konstantere Schließkraft eingestellt werden. Es ist jedoch auch möglich, dass der Motorstrom M3 dem Motorstrom M1 entspricht und die Durchflussöffnung 17 infolge der zweiten Kompensationsbewegung R2 erneut mit der ersten Schließkraft C1 verschlossen wird.

Durch Durchführen der Schritte 67 und 69 können somit etwaige während der Wartezeit ΔT auftretende thermische Spannungen und sowohl Verkürzungen als auch Ausdehnungen des Ventils 13 oder des Ejektors 15 ausgeglichen werden. Um auch bei einem längeren Verbleiben des Verschlusselements 11 in der ersten Endlage G weitere eventuell auftretende thermische Spannungen ausgleichen zu können, kann der Kompensationszyklus R zyklisch wiederholt werden und nach dem Durchführen des Schrittes 69 und des Bewegens des Verschlusselement 11 in Richtung der ersten Endlage G kann nach einer Zykluszeit ΔT1, die insbesondere der Wartezeit ΔT entsprechen kann, in einem Schritt 73 erneut überprüft werden, ob sich das Verschlusselement 11 in der ersten Endlage G befindet oder jedenfalls nicht in eine Zwischenstellung Z überführt wurde. Ist dies der Fall, können der Kompensationszyklus R mit den Schritten 67 und 69 wiederholt werden, um weitere sich während der Zykluszeit ΔT1 aufgebaute Spannungen lösen zu können. Das Ansteuern des Verschlusselements 11 zum Ausführen der ersten Kompensationsbewegung R1 in Richtung der zweiten Endlage O und zum Ausführen der ersten Kompensationsbewegung R2 in Richtung der ersten Endlage G können somit zyklisch wiederholt werden, wobei die Zykluszeit ΔT1 dabei insbesondere konstant gewählt sein oder beispielsweise nach jedem Durchführen der Schritte 67 und 69 erhöht werden kann.

Zudem kann es auch vorgesehen sein, dass während des Kompensationszyklus R zunächst die zweite Kompensationsbewegung R2 und dann die erste Kompensationsbewegung R1 durchgeführt wird, das Verschlusselement 11 also zunächst zum Bewegen auf die erste Endlage G zu und daraufhin zum Bewegen von der ersten Endlage G weg angesteuert wird. Auch durch ein solches Vorgehen können mechanische Spannungen abgebaut werden, wobei durch ein Bewegen des Verschlusselements 11 lediglich innerhalb des Sperrabschnitts 85 sichergestellt werden kann, dass keine Leckage auftritt.

Alternativ zu einem Verbleiben des Verschlusselements 11 in der ersten Endlage G kann nach dem Durchführen des Schritts 69 während der Zykluszeit ΔT1 jedoch auch ein Steuerbefehl zum Bewegen des Verschlusselements 11 in die zweite Endlage O oder eine Zwischenstellung Z und der Schritt 63 erfolgen, woraufhin das Verfahren bei einem erneuten Bewegen des Verschlusselements 11 in die erste Endlage G in einem sich daran anschließenden Schritt 61 wiederum durchgeführt werden kann. Wie bereits erwähnt, kann das Verfahren jedoch in analoger Weise auch nach dem Erreichen der zweiten Endlage O durchgeführt werden, um ein Verklemmen des Verschlusselements 11 verhindern und/oder eine etwaige Fehlpositionierungen ausgleichen zu können. Insofern können sich an den Schritt 69 und das Erreichen der zweiten Endlage O die Schritte 67 und 69 und der Kompensationszyklus R anschließen, sofern das Verschlusselement 11 während der Wartezeit ΔT nicht aus der zweiten Endlage O herausbewegt wird. Auch nach dem Erreichen der zweiten Endlage O kann der Kompensationszyklus R beispielsweise derart durchgeführt werden, dass zunächst die erste Kompensationsbewegung R1 und somit der Schritt 67 und daraufhin die zweite Kompensationsbewegung R2 und der Schritt 69 durchgeführt wird. Alternativ dazu kann jedoch auch zuerst der Schritt 69 und daraufhin der Schritt 67 erfolgen.

Beispielhaft wurde anhand von Fig. 3 eine Ausführungsform erläutert, bei welcher der Kompensationszyklus R nach einer Wartezeit ΔT nach dem Erreichen der ersten Endlage G oder der zweiten Endlage O durchgeführt wird. Es kann jedoch bei einigen Ausführungsformen auch vorgesehen sein, dass ein erster Kompensationszyklus R unmittelbar nach dem Erreichen einer der Endlagen G oder O durchgeführt wird, so dass das Verschlusselement 11 unmittelbar nach dem Erreichen einer Endlage G oder O zum Durchführen der Kompensationsbewegungen R1 und R2 angesteuert werden kann. Nach dem Erreichen einer Endlage G oder O kann somit unmittelbar ein erster Kompensationszyklus R erfolgen, wobei nach dem Abschluss des ersten Kompensationszyklus R gegebenenfalls weitere Kompensationszyklen R durchgeführt werden können und der Kompensationszyklus R zyklisch wiederholt werden kann. Dahingehend kann beispielsweise vorgesehen sein, dass nach dem ersten, unmittelbar nach dem Erreichen einer Endlage G oder O durchgeführten Kompensationszyklus R weitere Kompensationszyklen R mit der Zykluszeit ΔT1 zwischen jeweiligen Kompensationszyklen R durchgeführt werden, so dass ein weiterer Kompensationszyklus R lediglich dann durchgeführt werden kann, wenn das Verschlusselement 11 nach dem Abschluss eines jeweiligen Kompensationszyklus R darauffolgend während der Zykluszeit ΔT1, beispielsweise innerhalb von 10 Sekunden, nicht aus der jeweiligen Endlage G oder O herausbewegt wird. Alternativ dazu können jedoch auch die weiteren Kompensationszyklen R unmittelbar nach dem Abschluss eines jeweiligen Kompensationszyklus R begonnen werden, so dass das Verschlusselement 11 bei einigen Ausführungsformen dauerhaft im Rahmen der Kompensationsbewegungen R1 und R2 bewegt werden kann, solange das Verschlusselement 11 nicht für eine Bewegung in die jeweilige andere Endlage O oder G oder eine der erwähnten Zwischenstellungen Z angesteuert wird.

Zudem können Kompensationszyklen R bei einigen Ausführungsformen lediglich solange durchgeführt werden, bis eine vorgegebene maximale Anzahl von aufeinanderfolgenden Kompensationszyklen R erreicht ist, beispielsweise fünf oder zehn Kompensationszyklen R. Sobald die maximale Anzahl erreicht wurde, kann das Verschlusselement 11 bei solchen Ausführungsformen unbewegt bleiben und ein weiterer Kompensationszyklus R kann erst durchgeführt werden, wenn das Verschlusselement 11 zunächst aus der jeweiligen Endlage G oder O heraus in die jeweilige andere Endlage O oder G oder eine der Zwischenstellungen Z und daraufhin wieder in eine von den Endlagen G und O bewegt wurde.

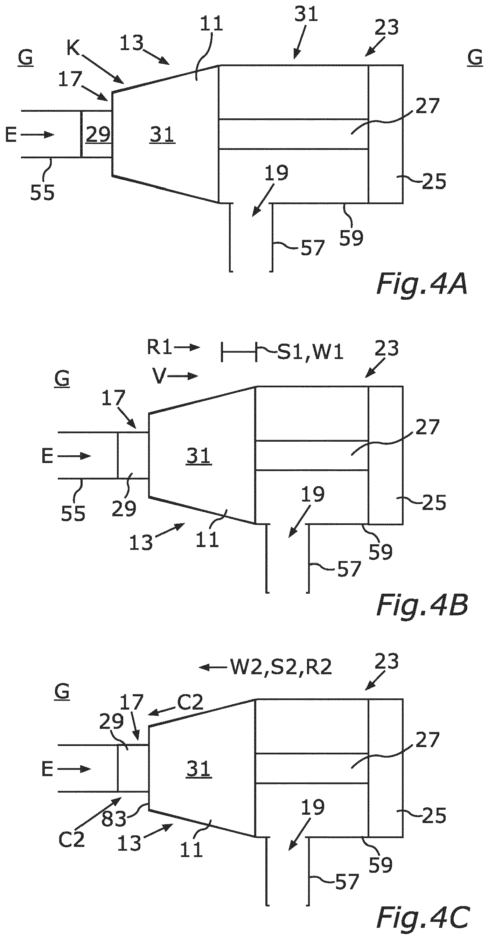

Die Fig. 4A bis 4C veranschaulichen das Ausgleichen von Verkürzungen des Ventils 13 aufgrund thermischer Spannungen durch das beschriebene Verfahren, nachdem das Verschlusselement 11 in die erste Endlage G bzw. in die Geschlossenstellung bewegt wurde.

In Fig. 4A ist das Ventil 13 bei in der ersten Endlage G positionierten Verschlusselement 11 gezeigt, wobei jedoch eine Spannungskraft K dargestellt ist, welche infolge von thermischen Spannungen des Gehäuses 59 auf das Verschlusselement 11 wirkt. Wird das Verschlusselement 11 nun in dem Verfahrensschritt 67 nach der Wartezeit ΔT in Richtung der zweiten Endlage O bewegt und die erste Kompensationsbewegung R1 ausgeführt, erfährt das Ventil 13 aufgrund dieser von dem Verschlusselement 11 nicht mehr kompensierten Spannungskraft K eine Verkürzung V und folgt gewissermaßen der Bewegung des Verschlusselements 11 nach (vgl. Fig. 4B). Da die Verkürzung V der ersten Wegstrecke W1 in der gezeigten Situation beispielhaft entspricht, entfernt sich das Verschlusselement 11 trotz der Bewegung um die erste Wegstrecke W1 und die erste Schrittzahl S1 in Richtung der zweiten Endlage O nicht von der Durchflussöffnung 17, sondern bleibt in der ersten Endlage G. Darauffolgend wird, wie Fig. 4C veranschaulicht, das Verschlusselement 11 zwar zum Ausführen der zweiten Kompensationsbewegung R2 in Richtung der ersten Endlage G angesteuert, da sich das Verschlusselement 11 jedoch bereits in der ersten Endlage G befindet, wird die entsprechende Bewegung nicht ausgeführt und der Motor 25 erfährt Schrittverluste der angesteuerten zweiten Anzahl von Schritten S2. Sofern daraufhin weitere Spannungskräften K auftreten oder die Spannungskraft K durch die Verkürzung V noch nicht vollständig ausgeglichen werden konnte, können diese Spannungskräfte durch zyklisches Wiederholen des Kompensationszyklus R und der Verfahrensschritte 67 und 69 (vgl. Fig. 3) ausgeglichen werden.

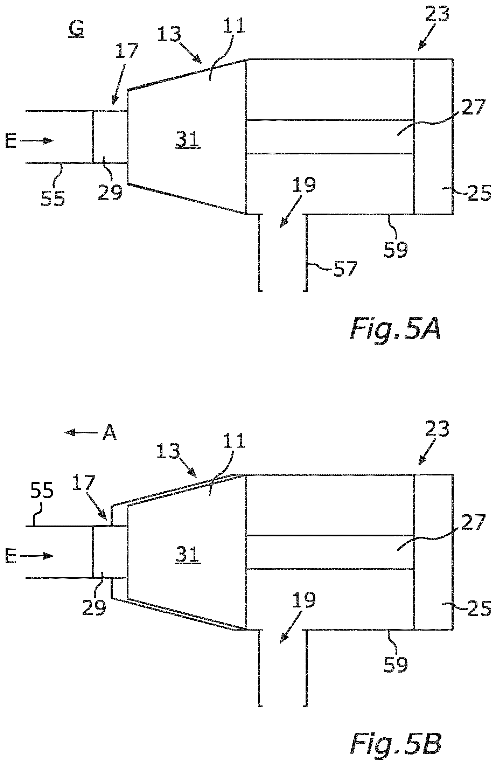

Anhand der Fig. 5A bis 5D ist umgekehrt der Ausgleich einer Ausdehnung A veranschaulicht, welche das Ventil 13 bei in der ersten Endlage G positioniertem Verschlussteil 11 beispielsweise aufgrund der sich verändernden thermischen Verhältnisse und/oder Druckverhältnisse ausführt. In Fig. 5A ist das Verschlusselement 11 dabei erneut in der ersten Endlage G gezeigt, wobei das Gehäuse 59 in der in Fig. 5B gezeigten Situation aufgrund thermischer Spannungen eine Ausdehnung A erfahren hat, so dass die Durchflussöffnung 17 von dem Verschlusselement 11 entfernt ist und sich eine von dem Verschlusselement 11 ausgeübte Schließkraft reduziert.

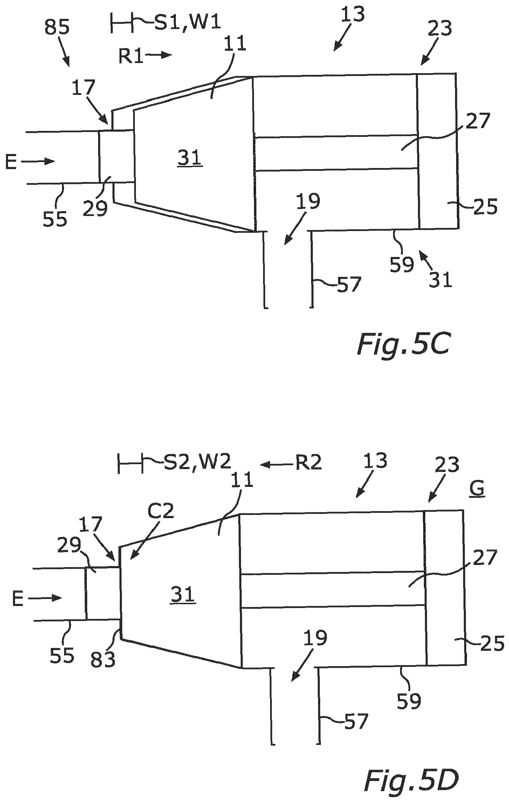

Erneut wird das Verschlusselement 11 nach der Wartezeit ΔT um die erste Wegstrecke W1 und die erste Schrittzahl S1 in Richtung der zweiten Endlage O bewegt (vgl. Fig 5C). Dabei ist die Wegstrecke W1 jedoch derart gering gewählt, dass das Verschlusselement 11 in dem Sperrabschnitt 85 des Ventils 13 bleibt und lediglich zwischen der ersten Endlage G und der Sperrstellung B bewegt wird, so dass eine Leckage verhindert wird. Nach dem Bewegen des Verschlusselements 11 in Richtung der zweiten Endlage O wird das Verschlusselement 11, wie Fig. 5D zeigt, um die zweite Wegstrecke W2 und die zweite Anzahl von Schritten S2 in Richtung der ersten Endlage G und insbesondere in die erste Endlage G verfahren, wobei die zweite Wegstrecke W2 größer als die erste Wegstrecke W1 und die zweite Schrittzahl S2 größer als die erste Schrittzahl S1 ist. Aufgrund dieser Wahl der Wegstrecken W2 und W1 bzw. der Schrittzahlen S2 und S1 wird das Verschlusselement 11 der Ausdehnung A des Ventils 13 somit durch die beiden entgegengensetzten Bewegungen letztlich nachgeführt, so dass die Durchflussöffnung 17 nach Durchführen der Verfahrensschritte 67 und 69 erneut zuverlässig verschlossen ist. Aufgrund des Einstellens des dritten Motorstroms M3 ist die Durchflussöffnung 17 zudem mit der im Vergleich zu der ersten Schließkraft C1 verringerten zweiten Schließkraft C2 verschlossen. Eventuelle weitere oder größere Ausdehnungen A des Ventils 13 können durch das erläuterte zyklische Wiederholen der Verfahrensschritte 67 und 69 ausgeglichen werden.

Zu den erläuterten Ausführungsformen eines Verschlusselements 11 mit Fortsatz 29 ist noch anzumerken, dass bei einem Bewegen des Verschlusselements 11 ausgehend von der ersten Endlage G (Geschlossenstellung) in Richtung der zweiten Endlage O der Fortsatz 29 einen Durchfluss von Fluid oder Gas zunächst verhindert. Ohne den Fortsatz 29 bewirkt jedoch ein Bewegen des Verschlusselements 11 ausgehend von der ersten Endlage G in Richtung der zweiten Endlage O nahezu unmittelbar einen Durchfluss von Fluid oder Gas (kontinuierlich zunehmende Leckage). Dieser Effekt kann durch ein Kompensationselement 87 verringert oder sogar vermieden werden, wie nachfolgend erläutert wird.

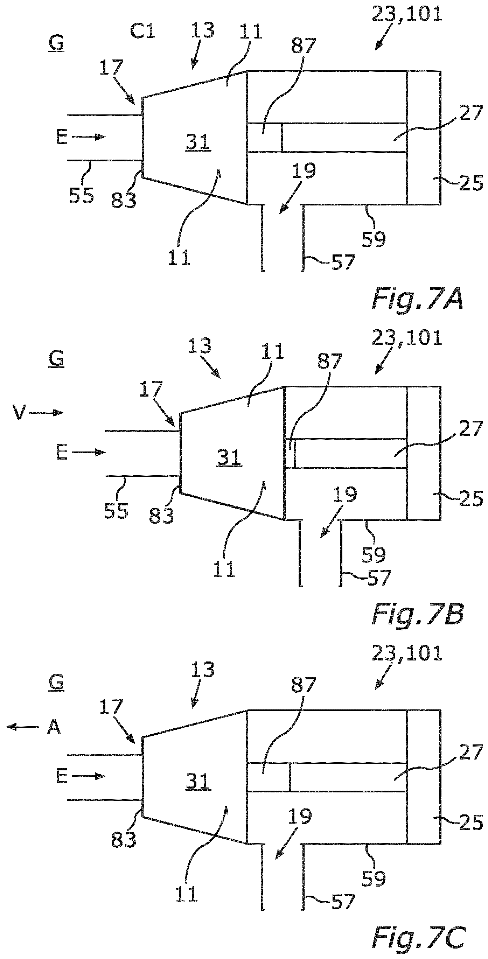

Die Figuren 7A bis 7C veranschaulichen ein Ventil 13, welches eine mechanische Kompensation thermischer Spannungen ermöglicht, die sich in der ersten Endlage G bzw. einer Geschlossenstellung aufbauen. Das Ventil 13 ist dabei grundsätzlich wie das beispielsweise anhand von den Figuren 1A bis 1D veranschaulichte Ventil 13 ausgebildet, so dass dieselben Komponenten mit denselben Bezugszeichen bezeichnet sind.

Insbesondere weist das Ventil 13 somit einen Antrieb 23 auf, mittels dessen ein Verschlusselement 11 zwischen der ersten Endlage G und der zweiten Endlage O bewegbar ist, wobei ein Motor 25 des Antriebs 23 axial relativ zu einem Gehäuse 59 des Ventils 13 unbeweglich an dem Gehäuse 59 gehalten ist. In den Figuren 7A bis 7C ist das Verschlusselement 11 in der ersten Endlage G gezeigt, in welcher eine Durchflussöffnung 17 des Ventils 13 durch das Verschlusselement 11 gegen einen Durchfluss von Fluid oder Gas blockiert ist. Jedoch weist das Verschlusselement 11 im Unterschied zu der anhand von Fig. 1A bis 1D gezeigten Ausführungsform keinen Fortsatz 29 auf, so dass die Durchflussöffnung 17 insbesondere durch ein Anliegen des Verschlusselements 11 an einer Begrenzung 83 der Durchflussöffnung 17 blockiert ist, wenn das Verschlusselement 11 in die erste Endlage G bewegt ist.

Um eine mechanische Kompensation thermischer Spannungen zu ermöglichen, weist das Ventil 13 zudem ein elastisch verformbares Kompensationselement 87 auf, welches in einem Kraftübertragungspfad von dem Gehäuse 59 zu dem Verschlusselement 11 angeordnet ist. Das Kompensationselement 87 ermöglicht es, sich etwa infolge einer Ausdehnung A oder einer Verkürzung V des Gehäuses 59 ändernde, von der Begrenzung 83 auf das Verschlusselement 11 übertragene Kräfte aufzunehmen und solche Kraftänderungen dadurch zu kompensieren, wenn das Verschlusselement 11 in der ersten Endlage G positioniert ist. Hierduch können eine Leckage und/oder ein Verklemmen des Verschlusselements 11 weitgehend verhindert werden. Dies wird nachstehend näher erläutert.

Fig. 7A zeigt das Ventil 13, nachdem das Verschlusselement 11 in die erste Endlage G bewegt wurde. Insbesondere kann das beispielhaft an dem Verschlusselement 11 angeordnete Kompensationselement 87, welches aus einem elastisch verformbaren Material und beispielsweise aus Gummi hergestellt und/oder als eine Feder ausgebildet sein kann, in dieser Stellung bereits aufgrund der zwischen dem Verschlusselement 11 und der Begrenzung 83 der Durchflussöffnung 17 wirkenden und insofern auf das Kompensationselement 87 übertragenen Schließkraft C1 elastisch verformt sein, so dass das Verschlusselement 11 durch das Kompensationselement 87 in Richtung einer weiteren Bewegung auf die Durchflussöffnung 17 zu vorgespannt sein kann. Eine solche Bewegung ist jedoch aufgrund des Anschlagens des Verschlusselements 11 an der Begrenzung 83 unterbunden.

Erfährt das Gehäuse 59 nach dem Bewegen des Verschlusselements 11 in die erste Endlage G beispielsweise eine Verkürzung V, wird aufgrund dieser Verkürzung V eine Kraft von der Begrenzung 83 auf das Verschlusselement 11 und auf das Kompensationselement 87 ausgeübt. Wie Fig. 7B zeigt, kann das Kompensationselement 87 diese Kraft durch eine elastische Verformung aufnehmen, so dass das Verschlusselement 11 der Verkürzung V gewissermaßen ausweichen und entgegen der von dem Kompensationselement 87 ausgeübten Vorspannung bewegt werden kann. Zwar kann sich somit durch die Verkürzung V eine von dem Kompensationselement 87 auf das Verschlusselement 11 ausgeübte Vorspannung erhöhen, so dass das Verschlusselement 11 die Durchflussöffnung 17 auch mit einer im Vergleich zu der Schließkraft C1 erhöhten Kraft verschließen kann, jedoch kann ein Verklemmen des Verschlusselements 11 aufgrund der Aufnahme der Kraft durch eine elastische Verformung des Kompensationselements 87 vermieden werden. Wird das Verschlusselement 11 daraufhin zu einer Bewegung in die zweite Endlage O angesteuert, kann sich zunächst das Kompensationselement 87 aufgrund der sich reduzierenden Kraft zwischen dem Motor 25 und dem Verschlusselement 11 entspannen und das Verschlusselement 11 daraufhin von der Durchflussöffnung 17 entfernt werden, sobald das Kompensationselement 87 einen Einbauzustand erreicht hat.

Fig. 7C veranschaulicht eine Situation, in welcher das Gehäuse 59 nach einem Bewegen des Verschlusselements 11 in die erste Endlage G eine Ausdehnung A erfährt. Da das Kompensationselement 87 bereits durch das Bewegen des Verschlusselements 11 in die erste Endlage G elastisch verformt wurde und daher eine Vorspannung auf das Verschlusselement 11 in Richtung der Durchflussöffnung 17 ausübt, kann das Verschlusselement 11 der Ausdehnung A des Gehäuses 59 gewissermaßen nachgeführt werden, indem sich das elastisch verformte Kompensationselement 87 entspannt und ebenfalls ausdehnt. Dadurch kann das Verschlusselement 11 trotz der Ausdehnung A in Anlage zu der Begrenzung 83 gehalten werden, um eine ungewollte Leckage zu vermeiden.

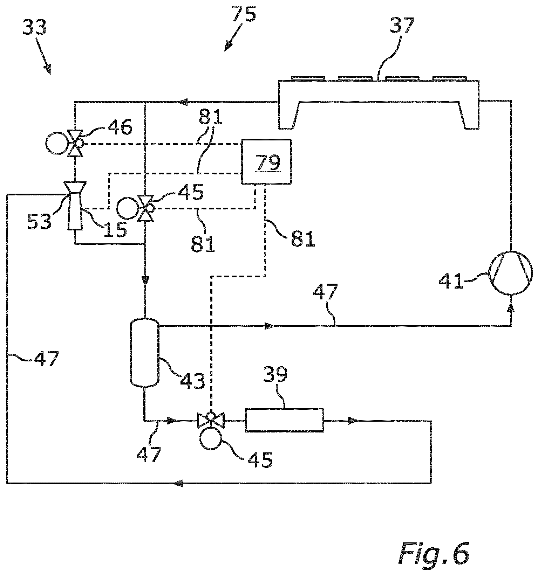

Grundsätzlich können etwaige thermische Längenänderungen des Gehäuses 59 somit auch durch eine solche mechanische Lösung zuverlässig ausgeglichen werden. Insbesondere kann das Ventil 13 bzw. dessen Antrieb 23 jedoch steuerbar sein und das Ventil 13 kann mit einer Steuereinrichtung 79 (vgl. auch Fig. 6) verbunden sein, welche dazu ausgebildet ist, das Verschlusselement 11 gemäß dem vorstehend erläuterten Verfahren zu positionieren, so dass sowohl eine mechanische als auch eine steuerungstechnische Kompensation von Längenänderungen des Gehäuses 59 vorgesehen sein kann.

Im Hinblick auf das Durchführen des erläuterten Positionierverfahrens bei einem Ventil 13 mit einem in einem Kraftübertragungspfad von dem Gehäuse 59 zu dem Verschlusselement 11 angeordneten elastisch verformbaren Kompensationselement 87 ergibt sich zudem die Besonderheit, dass die während eines Kompensationszyklus R nach dem Erreichen der ersten Endlage G angesteuerte erste Kompensationsbewegung R1 durch eine elastische Verformung des Kompensationselement 87 kompensiert werden kann. Insofern kann durch die erste Kompensationsbewegung R1 zwar eine von dem Verschlusselement 11 auf die Begrenzung 83 ausgeübte Kraft verringert werden, um mechanische Spannungen abzubauen, jedoch muss das Verschlusselement 11 dazu nicht bewegt werden und die Durchflussöffnung 17 kann zuverlässig verschlossen bleiben.

Das Ansteuern der ersten Kompensationsbewegung ist dabei im Grunde mit einer anhand von Fig. 7C veranschaulichten Ausdehnung A des Gehäuses 59 vergleichbar, indem sich auch bei einem Ansteuern eines Entfernens des Verschlusselements 11 von der Durchflussöffnung 17 durch den Antrieb 23 eine von dem Verschlusselement 11 auf die Begrenzung 83 ausgeübte Kraft verringert. Daher kann sich das elastisch verformte Kompensationselement 87 auch infolge einer solchen angesteuerten Bewegung ausdehnen und die angesteuerte erste Kompensationsbewegung R1 dadurch ausgleichen, so dass sich das Verschlusselement 11 nicht von der Durchflussöffnung 17 entfernt.

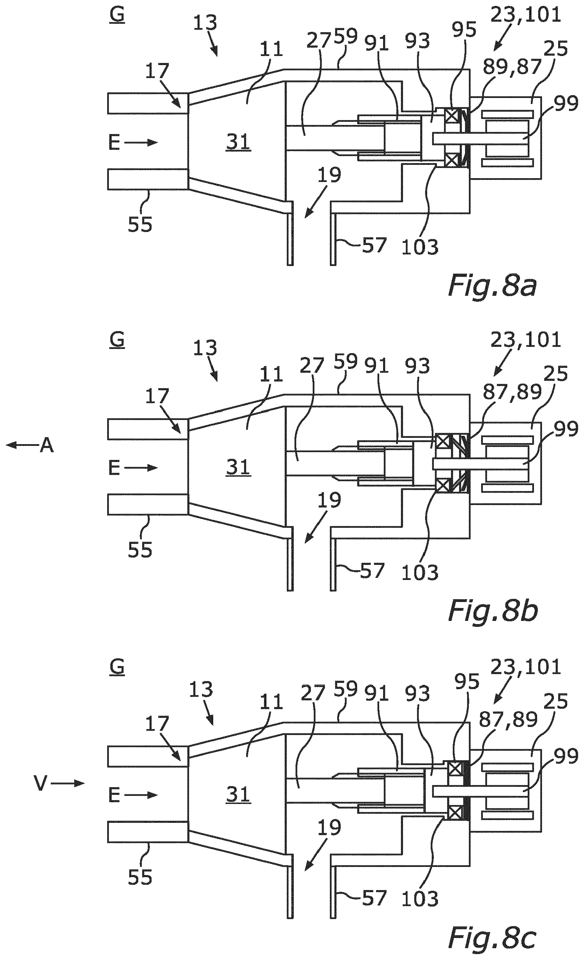

Die Figuren 8A bis 8C zeigen eine weitere Ausführungsform eines Ventils 13 mit einem in einem Kraftübertragungspfad zwischen einem Gehäuse 59 des Ventils 13 und einem Verschlusselement 11 angeordneten elastisch verformbaren Kompensationselement 87.

Bei dieser Ausführungsform ist der Antrieb 23 für das Verschlusselement 11 als ein Spindeltrieb 101 ausgebildet und weist eine von einem elektrischen Motor 25, insbesondere einem Schrittmotor, in Rotation versetzbare Antriebswelle 99 auf. Die Antriebswelle 99 ist dazu ausgebildet, eine Spindelmutter 93 in Rotation zu versetzen, wobei die Spindelmutter 93 drehfest, jedoch relativ zu der Antriebswelle 99 axial verschieblich mit der Antriebswelle 99 verbunden ist. Alternativ hierzu könnte die Spindelmutter 93 starr mit der Antriebswelle 99 verbunden sein und die Antriebswelle 99 könnte einen relativ zu einem Stator axial verschieblichen Rotor des Motors 25 bilden. Innerhalb eines Innengewindes 91 der Spindelmutter 93 ist ferner eine Spindel 27 mit Außengewinde geführt, welche in dem Gehäuse 59 drehfest, jedoch axial beweglich gelagert ist. Die Spindel 27 steht somit mit der Spindelmutter 93 in Gewindeeingriff und kann aufgrund der Rotation der Spindelmutter 93 translatorisch in Bewegung versetzt werden. Diese translatorische Bewegung wird auf das Verschlusselement 11 übertragen.

Das Kompensationselement 87 ist bei dieser Ausführungsform als eine Feder 89, insbesondere eine Tellerfeder, ausgebildet, durch welche ein Lager 95 der Spindelmutter 93 und damit (über die Spindel 27) das Verschlusselement 11 in Richtung der ersten Endlage G vorgespannt ist. Die Feder 89 ist an dem axial fest mit dem Gehäuse 59 verbundenen Motor 25 abgestützt, so dass letztlich auch die Spindelmutter 93 und das Verschlusselement 11 über die Feder 89 bzw. das Kompensationselement 87 an dem Gehäuse 59 abgestützt sind.

Fig. 8A zeigt zunächst eine Situation, nachdem das Verschlusselement 11 in die erste Endlage G bewegt wurde. In dieser Stellung ist das Kompensationselement 87 bereits elastisch verformt und die Feder 89 komprimiert, so dass das Lager 85 der Spindelmutter 93 von einem Anschlag 103 für das Lager 95 entfernt positioniert ist und das Kompensationselement 87 eine in Richtung der Durchflussöffnung 17 gerichtete Vorspannung auf das Verschlusselement 11 ausübt.

Erfährt das Gehäuse 59 nun eine Ausdehnung A, reduziert sich die von dem Verschlusselement 11 auf das Kompensationselement 87 übertragene Kraft, so dass sich die Feder 89 entfalten und das Verschlusselement 11 der Ausdehnung A nachgeführt werden kann (vgl. Fig. 8B). Beispielhaft ist in Fig. 8B eine maximal auszugleichende Ausdehnung A gezeigt. in welcher das Lager 95 aufgrund des Entfaltens der Feder 89 an dem Anschlag 103 anliegt.

Da die Feder 89 ferner in der in Fig. 8A veranschaulichten Situation nach dem Erreichen der ersten Endlage nicht vollständig komprimiert ist, kann die Feder 89 zudem infolge einer Verkürzung V des Gehäuses 59 weiter komprimiert werden, so dass das Verschlusselement 11 der Verkürzung V ausweichen und ein Verklemmen des Verschlusselements 11 verhindert werden kann. Dies ist in Fig. 8C veranschaulicht. Erneut können somit sowohl Ausdehnungen A als auch Verkürzungen V des Gehäuses 59 mechanisch durch das elastisch verformbare Kompensationselement 87 ausgeglichen werden.

Auch der Antrieb 23 des anhand von Fig. 8A bis 8C veranschaulichten Ventils 13 kann insbesondere steuerbar und das Ventil 13 mit einer Steuereinrichtung 79 verbunden sein, um das Verschlusselement 11 gemäß einem der vorstehend erläuterten Verfahren positionieren zu können. Insbesondere kann ein solches zusätzliches steuerungstechnischen Kompensieren von Ausdehnungen A und Verkürzungen V es auch ermöglichen, größere Ausdehnungen A oder größere Verkürzungen V auszugleichen, indem das Verschlusselement 11 etwa durch Durchführen eines Kompensationszyklus R ausgehend von der in Fig. 8B gezeigten Position wieder in eine Position überführt werden kann, in welcher das Lager 95 der Spindelmutter 93 von dem Anschlag 103 entfernt ist (vgl. Fig. 8A), so dass etwaige nachfolgende Ausdehnungen A wieder mechanisch durch Ausdehnen der Feder 89 ausgeglichen werden können. Auch im Falle einer vollständigen Komprimierung der Feder 89 infolge einer Verkürzung V des Gehäuses 59 kann durch Durchführen eines Kompensationszyklus R die ursprüngliche Schließkraft C1 oder eine demgegenüber reduzierte Schließkraft C2 eingestellt werden, so dass sich die Feder 89 wieder entfalten und eine mechanische Kompensation einer weiteren Verkürzung V ermöglicht werden kann.

Generell kann ist noch anzumerken, dass bei Verwendung eines elastisch verformbaren Kompensationselements 87 der Antrieb 23 bzw. der Motor 25 schwächer - und somit kostengünstiger - ausgelegt werden kann als ohne Kompensationselement 87, da durch das Kompensationselement 87 Kraftspitzen vermieden oder zumindest verringert werden.

Anhand der Figuren wurden vorstehend lediglich Ausführungsformen von Ventilen 13 erläutert, bei welchen ein elastisch verformbares Kompensationselement 87 in einem Kraftübertragungspfad von dem Gehäuse 59 zu dem Verschlusselement 11 angeordnet ist. Dies kann jedoch in analoger Weise auch bei einem Ejektor 15, beispielsweise dem anhand der Fig. 2A und 2B veranschaulichten Ejektor 15, umgesetzt werden.

Fig. 6 zeigt schematisch und beispielhaft eine Kälte- oder Wärmeanlage 33 mit einem Ventil und/oder Ejektorsystem 75, welches einen Ejektor 15, zwei Expansionsventile 45 sowie ein Absperr- oder Regelventil 46 aufweist. Zudem ist eine Steuereinrichtung 79 vorgesehen, welche dazu ausgebildet ist, über Steuerleitungen 81 jeweilige Antriebe zum Bewegen von Verschlusselementen der Ventile 45 und 46 sowie des Ejektors 15 gemäß dem vorstehend erläuterten Verfahren anzusteuern. Die Steuereinrichtung 79 kann insbesondere Teil einer Steuereinrichtung sein, welche zum Steuern der Kälte- oder Wärmeanlage 33 insgesamt vorgesehen ist. Ferner können die Ventile 45 und 46 und/oder der Ejektor 15 auch mit einem elastisch verformbaren Kompensationselement 87 ausgebildet sein, um wie vorstehend erläutert eine mechanische Kompensation von Längenänderungen eines Gehäuses 59 der Ventile 45 und 46 und/oder des Ejektors 15 zu ermöglichen.

Die veranschaulichte Kälte- oder Wärmeanlage 33 umfasst ein Behältnis 43 zum Sammeln von Kältemitteln, einen Verdampfer 39, einen Verdichter 41 und einen Verflüssiger 37 und das Kältemittel wird durch Leitungen 47 geführt, wobei Pfeile die Strömungsrichtung des Kältemittels anzeigen. Dem Verdampfer 39 über ein Expansionsventil 45 aus dem Behältnis 43 zugeführtes Kältemittel kann in dem Verdampfer 39 verdampfen und dabei der Umgebung Wärme entziehen, wobei der Verdampfer 39 ein Gemisch aus gasförmigem und flüssigem Kältemittel erzeugt, welches von dem Ejektor 15 über dessen Sauganschluss 53 abgesaugt und auf ein höheres Druckniveau gebracht werden kann. Ein gasförmiger Anteil des in dem Behältnis 43 vorhandenen Kältemittels kann ferner von dem Verdichter 41 über die Leitung 47 angesaugt und dem Verflüssiger 37 zugeführt werden, an welchem das Kältemittel verflüssigt und über ein Drosselventil 45 dem Behältnis oder über das Absperr- oder Regelventil 46 als Treibmedium dem Ejektor 15 zugeführt werden kann. Dabei kann das Absperr- oder Regelventil 46 auch, wie beispielsweise in Fig. 2A und 2B gezeigt, in den Ejektor 15 integriert sein.

Um den Betrieb der Kälte- oder Wärmeanlage 33 anzupassen, kann die Steuereinrichtung 79 insbesondere dazu ausgebildet sein, Bewegungen von Verschlusselementen 11 der Ventile 45 und 46 sowie des Ejektor 15 bzw. deren Antriebe 23 anzusteuern. Da insbesondere bei solchen Wärme- oder Kälteanlagen 33 verhältnismäßig hohe Temperaturunterschiede zwischen einzelnen Abschnitten der Anlage vorliegen können und die Anlage auch sich verändernden Umgebungstemperaturen ausgesetzt sein kann, können gerade bei Ventilen 45, 46 oder Ejektoren 15, die in einer solchen Anlage 33 verwendet werden, die erläuterten thermischen Spannungen auftreten. Daher ist die Steuereinrichtung 79 als Teil des Ventil- und/oder Ejektorsystems 75 dazu eingerichtet, die Antriebe 23 des Ejektors 15 bzw. der Ventile 45 und 46 anzusteuern, um das erläuterte Verfahren zum Positionieren der Verschlusselemente 11 durchzuführen und etwaige thermische Spannungen ausgleichen zu können. Insbesondere kann somit die Verwendung von Ventil- und/oder Ejektorsystemen 75 in einer Kälte- oder Wärmeanlage 33 vorgesehen sein, wobei in einem solchen Ventil- und/oder Ejektorsystem 75 insbesondere zumindest ein Ventil 45 oder 46 oder ein Ejektor 15 sowie eine Steuereinrichtung 79 vorgesehen sein können, um das jeweilige Verschlusselement 11 entsprechend dem hier erläuterten Verfahren positionieren zu können. Zudem kann eine solche Kälteanlage auch in einem Kühlmöbel, beispielsweise einem Kühlschrank zum Einsatz kommen. Die Ventile 45 und 46 und/oder der Ejektor 15 können ferner mit einem in einem Kraftübertragungspfad von einem Gehäuse 59 zu einem Verschlusselement 11 angeordneten elastisch verformbaren Kompensationselement 87 ausgebildet sein, um auch eine mechanische Kompensation thermisch bedingter Längenänderungen des Gehäuses 59 zu ermöglichen.

Abschließend werden verschiedene Ausführungsformen der Erfindung nochmals zusammengefasst wie folgt, wobei in Klammern beispielhaft - jedoch nicht einschränkend - auf vorstehend genannte Elemente Bezug genommen wird:
Ausführungsform 1: Verfahren zum Positionieren eines mittels eines Antriebs (23) zwischen einer ersten Endlage (G) und einer zweiten Endlage (O) bewegbaren Verschlusselements (11) eines Ventils (13) oder Ejektors (15),
   wobei das Verschlusselement (11) eine Durchflussöffnung (17) des Ventils (13) oder Ejektors (15) in der ersten Endlage (G) gegen einen Durchfluss von Fluid oder Gas blockiert und die Durchflussöffnung (17) in der zweiten Endlage (O) für einen Durchfluss von Fluid oder Gas freigibt,
   bei welchem:
      - das Verschlusselement (11) in eine von der ersten Endlage (G) und der zweiten Endlage (O) bewegt wird und
      - nach dem Bewegen des Verschlusselements (11) in die eine Endlage (G, O) ein Kompensationszyklus (R) durchgeführt wird,
   wobei das Verschlusselement (11) während des Kompensationszyklus (R) zum Ausführen einer ersten Kompensationsbewegung (R1) in Richtung der anderen Endlage (O, G) und zum Ausführen einer zweiten Kompensationsbewegung (R2) in Richtung der einen Endlage (G, O) angesteuert wird.
Ausführungsform 2: Verfahren nach Ausführungsform 1,
   wobei das Verschlusselement (11) translatorisch zwischen der ersten Endlage (G) und der zweiten Endlage (O) bewegbar ist.
Ausführungsform 3: Verfahren nach Ausführungsform 1 oder 2,
   wobei das Verschlusselement (11) zunächst zum Ausführen der ersten Kompensationsbewegung (R1) und daraufhin zum Ausführen der zweiten Kompensationsbewegung (R2) angesteuert wird; oder umgekehrt.
Ausführungsform 4: Verfahren nach einer der vorhergehenden Ausführungsformen,
   wobei das Verschlusselement (11) zum Ausführen der ersten Kompensationsbewegung (R1) um eine erste Wegstrecke (W1) und zum Ausführen der zweiten Kompensationsbewegung (R2) um eine zweite Wegstrecke (W2) angesteuert wird,
   wobei die zweite Wegstrecke (W2) größer ist als die erste Wegstrecke (W1).
Ausführungsform 5:
   Verfahren nach einer der vorhergehenden Ausführungsformen,
   wobei das Verschlusselement (11) schrittweise bewegbar ist und wobei das Verschlusselement (11) zum Ausführen der ersten Kompensationsbewegung (R1) um eine erste Anzahl von Schritten (S1) und zum Ausführen der zweiten Kompensationsbewegung (R2) um eine zweite Anzahl von Schritten (S2) angesteuert wird,
   wobei die zweite Anzahl von Schritten (S2) größer ist als die erste Anzahl von Schritten (S1).
Ausführungsform 6: Verfahren nach Ausführungsform 5,
   wobei die zweite Anzahl von Schritten (S2) um genau einen Schritt größer ist als die erste Anzahl von Schritten (S1).
Ausführungsform 7: Verfahren nach einer der vorhergehenden Ausführungsformen,
   wobei das Verschlusselement (11) zum Ausführen der ersten Kompensationsbewegung (R1) zu einer Bewegung um weniger als 50 Mikrometer, insbesondere um weniger als 20 Mikrometer, in Richtung der anderen Endlage (O, G) angesteuert wird.
Ausführungsform 8: Verfahren nach einer der vorhergehenden Ausführungsformen,
   wobei die angesteuerte erste Kompensationsbewegung (R1) durch eine elastische Verformung eines elastisch verformbaren Kompensationselements (87) kompensiert wird, welches in einem Kraftübertragungspfad von einem Gehäuse (59) des Ventils (13) oder des Ejektors (15) zu dem Verschlusselement (11) angeordnet ist.
Ausführungsform 9: Verfahren nach einer der vorhergehenden Ausführungsformen,
   wobei der Kompensationszyklus (R) nach einer vorgegebenen oder vorgebbaren Wartezeit (ΔT) nach dem Erreichen der einen Endlage (G, O) durchgeführt wird.
Ausführungsform 10: Verfahren nach Ausführungsform 9,
   wobei die Wartezeit (ΔT) kleiner als 120 Sekunden ist, insbesondere kleiner als 60 Sekunden und/oder kleiner als 30 Sekunden; und/oder
   wobei die Wartezeit (ΔT) etwa 10 Sekunden beträgt.
Ausführungsform 11: Verfahren nach einer der vorhergehenden Ausführungsformen,
   wobei das Verschlusselement (11) in die erste Endlage (G) bewegt wird und wobei der Kompensationszyklus (R) nach dem Bewegen des Verschlusselements (11) in die erste Endlage (G) durchgeführt wird.
Ausführungsform 12: Verfahren nach Ausführungsform 11,
   wobei der Durchfluss des Fluids oder Gases durch die Durchflussöffnung (17) durch Positionieren des Verschlusselements (11) innerhalb eines Sperrabschnitts (85) des Ventils (13) oder Ejektors (15) blockierbar ist, welcher durch die erste Endlage (G) und eine gegenüber der ersten Endlage (G) in Richtung der zweiten Endlage (O) versetzte Sperrstellung (B) begrenzt ist,
   wobei das Verschlusselement (11) durch das Ausführen der ersten Kompensationsbewegung (R1) in Richtung der zweiten Endlage (O) lediglich innerhalb des Sperrabschnitts (85) bewegt wird.
Ausführungsform 13: Verfahren nach Ausführungsform 11 oder 12,
   wobei die Durchflussöffnung (17) durch das Bewegen des Verschlusselements (11) in die erste Endlage (G) mit einer ersten Schließkraft (C1) verschlossen wird.
Ausführungsform 14: Verfahren nach Ausführungsform 13,
   wobei die erste Schließkraft (C1) einer durch den Antrieb (23) auf das Verschlusselement (11) übertragbaren Kraft entspricht.
Ausführungsform 15: Verfahren nach Ausführungsform 13 oder 14,
   wobei die Durchflussöffnung (17) durch das Ausführen der zweiten Kompensationsbewegung (R2) mit einer zweiten Schließkraft (C2) verschlossen wird,
   wobei die zweite Schließkraft (C2) geringer ist als die erste Schließkraft (C1).
Ausführungsform 16: Verfahren nach einer der vorhergehenden Ausführungsformen,
   wobei der Antrieb (23) dazu angesteuert wird, das Verschlusselement (11) bei der zweiten Kompensationsbewegung (R2) mit einer geringeren Kraft als bei dem Bewegen in die eine Endlage (G, O) anzutreiben.
Ausführungsform 17: Verfahren nach einer der vorhergehenden Ausführungsformen,
   wobei die durch den Antrieb (23) auf das Verschlusselement (11) übertragbare Kraft einstellbar ist, insbesondere durch Einstellen eines Motorstroms (M1, M2, M3) eines Motors (25) des Antriebs (23).
Ausführungsform 18: Verfahren nach einer der vorhergehenden Ausführungsformen,
   wobei die von dem Antrieb (23) bei dem Bewegen in die eine Endlage (G, O) auf das Verschlusselement (11) übertragene Kraft vor einem erwarteten Erreichen der einen Endlage (G, O) reduziert wird.
Ausführungsform 19: Verfahren nach einer der vorhergehenden Ausführungsformen,
   wobei der Antrieb dazu angesteuert wird, das Verschlusselements (11) bei der ersten Kompensationsbewegung (R1) mit einer größeren Kraft als bei der zweiten Kompensationsbewegung (R2) und/oder als bei dem Bewegen in die eine Endlage (G, O) anzutreiben.
Ausführungsform 20: Verfahren nach einer der vorhergehenden Ausführungsformen,
   wobei der Kompensationszyklus (R) zyklisch wiederholt wird.
Ausführungsform 21: Verfahren nach Ausführungsform 20,
   wobei eine Zykluszeit (ΔT1) zwischen zwei aufeinanderfolgenden Durchführungen des Kompensationszyklus (R) konstant ist oder sukzessive zunimmt.
Ausführungsform 22: Verfahren nach Ausführungsform 20 oder 21,
   wobei das zyklische Wiederholen des Kompensationszyklus (R) nach einem Durchführen einer vorgegebenen oder vorgebbaren maximalen Anzahl von aufeinanderfolgenden Kompensationszyklen (R) beendet wird.
Ausführungsform 23: Ventil (13) oder Ejektor (15),
   umfassend
      - ein zwischen einer ersten Endlage (G) und einer zweiten Endlage (O) bewegbares Verschlusselement (11), welches dazu ausgebildet ist, eine Durchflussöffnung (17) des Ventils (13) oder Ejektors (15) in der ersten Endlage (G) gegen einen Durchfluss von Fluid oder Gas zu blockieren und die Durchflussöffnung (17) in der zweiten Endlage (O) für einen Durchfluss von Fluid oder Gas freizugeben, und
      - ein elastisch verformbares Kompensationselement (87),
   wobei das elastisch verformbare Kompensationselement (87) in einem Kraftübertragungspfad von einem Gehäuse (59) des Ventils (13) oder Ejektors (15) zu dem Verschlusselement (11) angeordnet ist.
Ausführungsform 24: Ventil (13) oder Ejektor (15) nach Ausführungsform 23,
   wobei das Verschlusselement (15) über das Kompensationselement (87) an dem Gehäuse (59) abgestützt ist.
Ausführungsform 25: Ventil (13) oder Ejektor (15) nach Ausführungsform 23 oder 24,
   wobei das Verschlusselement translatorisch zwischen der ersten Endlage (G) und der zweiten Endlage (O) bewegbar ist.
Ausführungsform 26: Ventil (13) oder Ejektor (15) nach einer der Ausführungsformen 23 bis 25,
   wobei das Verschlusselement (11) über das Kompensationselement (87) in Richtung der ersten Endlage (G) vorgespannt ist.
Ausführungsform 27: Ventil (13) oder Ejektor (15) nach einer der Ausführungsformen 23 bis 26,
   wobei das Kompensationselement (87) dazu ausgebildet ist, infolge einer Bewegung des Verschlusselements (11) in die erste Endlage (G) elastisch verformt zu werden.
Ausführungsform 28: Ventil (13) oder Ejektor (15) nach einer der Ausführungsformen 23 bis 27,
   wobei das Kompensationselement (87) durch eine auf das Verschlusselement (11) ausgeübte und in Richtung der zweiten Endlage (O) gerichtete Kraft elastisch verformbar ist, wenn das Verschlusselement (11) in der ersten Endlage (G) positioniert ist.
Ausführungsform 29: Ventil (13) oder Ejektor (15) nach einer der Ausführungsformen 23 bis 28,
   wobei das Kompensationselement (87) an dem Verschlusselement (11) oder einem gemeinsam mit dem Verschlusselement (11) translatorisch bewegbaren Verbindungsabschnitt angeordnet ist.
Ausführungsform 30: Ventil (13) oder Ejektor (15) nach einer der Ausführungsformen 23 bis 29, ferner umfassend einen Spindeltrieb (101) zum Antreiben des Verschlusselements (15), mit einer zu einer Drehbewegung antreibbaren Spindelmutter (93) oder Spindel (27),
   wobei die Spindelmutter (93) oder Spindel (27), insbesondere über ein Lager (95), durch das Kompensationselement (87) an dem Gehäuse (59) abgestützt ist.
Ausführungsform 31:
   Ventil (13) oder Ejektor (15) nach Ausführungsform 30,
   wobei die Spindelmutter (93) oder Spindel (27), insbesondere über ein Lager (95), durch das Kompensationselement (87) in Richtung der ersten Endlage (G) vorgespannt ist.
Ausführungsform 32: Ventil (13) oder Ejektor (15) nach Ausführungsform 30 oder 31,
   wobei die Spindelmutter (93) oder Spindel (27) und eine Antriebswelle (99) starr miteinander verbunden sind und die Antriebswelle (99) relativ zu einem zugeordneten Antrieb (23) axial beweglich ist; oder
   wobei die Spindelmutter (93) oder Spindel (27) und eine Antriebswelle (99) drehfest, jedoch relativ zueinander axial verschieblich miteinander verbunden sind.
Ausführungsform 33: Ventil (13) oder Ejektor (15) nach einer der Ausführungsformen 23 bis 32,
   wobei das Kompensationselement (87) als eine Feder (89), insbesondere eine Tellerfeder, ausgebildet ist.
Ausführungsform 34: Ventil- und/oder Ejektorsystem (75),
   umfassend:
   - zumindest ein Ventil (13) und/oder zumindest einen Ejektor (15),
   - ein zwischen einer ersten Endlage (G) und einer zweiten Endlage (O) bewegbares Verschlusselement (11), welches dazu ausgebildet ist, eine Durchflussöffnung (17) des Ventils (13) oder Ejektors (15) in der ersten Endlage (G) gegen einen Durchfluss von Fluid oder Gas zu blockieren und die Durchflussöffnung (17) in der zweiten Endlage (O) für einen Durchfluss von Fluid oder Gas freizugeben;
   - einen Antrieb (23) zum Bewegen des Verschlusselements (11); und
   - eine Steuereinrichtung (79), welche dazu eingerichtet ist, das Verschlusselement (11) gemäß einem Verfahren nach einer der Ausführungsformen 1 bis 22 zu positionieren.
Ausführungsform 35: Ventil- und/oder Ejektorsystem (75) nach Ausführungsform 34,
   wobei der Antrieb (23) einen Schrittmotor (25) umfasst.
Ausführungsform 36: Ventil- und/oder Ejektorsystem (75) nach Ausführungsform 34 oder 35,
   wobei das Verschlusselement (11) als Ventilnadel (31) ausgebildet ist.
Ausführungsform 37: Ventil- und/oder Ejektorsystem (75) nach einer der Ausführungsformen 34 bis 36,
   wobei das zumindest eine Ventil (13) und/oder der zumindest eine Ejektor (15) nach einer der Ausführungsformen 23 bis 33 ausgebildet sind/ist.
Ausführungsform 38: Kälteanlage (33), Wärmeanlage (33) oder Kühlmöbel mit einem Ventil- und/oder Ejektorsystem (75) nach einer der Ausführungsformen 34 bis 37 und/oder mit einem Ventil (13) und/oder einem Ejektor (15) nach einer der Ausführungsformen 23 bis 33.
Ausführungsform 39: Verwendung eines Ventil- und/oder Ejektorsystems (75) nach einer der Ausführungsformen 34 bis 37 und/oder eines Ventils (13) und/oder eines Ejektors (15) nach einer der Ausführungsformen 23 bis 33 in einer Kälteanlage (33), in einer Wärmeanlage (33) oder in einem Kühlmöbel.

### Bezugszeichenliste

- 11: Verschlusselement
- 13: Ventil
- 15: Ejektor
- 17: Durchflussöffnung
- 19: Ausgangsöffnung
- 21: Saugöffnung
- 23: Antrieb
- 25: Motor
- 27: Spindel
- 29: Fortsatz
- 31: Ventilnadel
- 33: Kälteanlage/Wärmeanlage
- 35: Verdichter
- 37: Verflüssiger
- 39: Verdampfer
- 41: Verdichter
- 43: Behältnis
- 45: Expansionsventil
- 46: Absperr- oder Regelventil
- 47: Leitung
- 49: Treibanschluss
- 51: Treibdüse
- 53: Sauganschluss
- 55: Eingang
- 57: Ausgang
- 59: Gehäuse
- 61: Verfahrensschritt
- 63: Verfahrensschritt
- 65: Verfahrensschritt
- 67: Verfahrensschritt
- 69: Verfahrensschritt
- 71: Prüfen
- 73: Prüfen
- 75: Ventilsystem
- 79: Steuereinrichtung
- 81: Steuerleitung
- 83: Begrenzung
- 84: Kegelfläche
- 85: Sperrabschnitt
- 86: Innenfläche
- 87: Kompensationselement
- 89: Feder
- 91: Innengewinde
- 93: Spindelmutter
- 95: Lager
- 99: Antriebswelle
- 101: Spindeltrieb
- 103: Anschlag
- A: Ausdehnung
- B: Sperrstellung
- C1: erste Schließkraft
- C2: zweite Schließkraft
- E: Eingangsstrom
- F: Ausgangsstrom
- G: erste Endlage
- K: Spannung
- M1: erster Motorstrom
- M2: zweiter Motorstrom
- M3: dritter Motorstrom
- O: zweite Endlage
- R: Kompensationszyklus
- R1: erste Kompensationsbewegung
- R2: zweite Kompensationsbewegung
- S1: erste Anzahl von Schritten
- S2: zweite Anzahl von Schritten
- T: Treibstrom
- U: Saugstrom
- V: Verkürzung
- W1: erste Wegstrecke
- W2: zweite Wegstrecke
- Z: Zwischenstellung
- ΔT: Wartezeit
- ΔT1: Zykluszeit

## Patentansprüche

1. Verfahren zum Positionieren eines mittels eines Antriebs (23) zwischen einer ersten Endlage (G) und einer zweiten Endlage (O) bewegbaren Verschlusselements (11) eines Ventils (13) oder Ejektors (15),
wobei das Verschlusselement (11) eine Durchflussöffnung (17) des Ventils (13) oder Ejektors (15) in der ersten Endlage (G) gegen einen Durchfluss von Fluid oder Gas blockiert und die Durchflussöffnung (17) in der zweiten Endlage (O) für einen Durchfluss von Fluid oder Gas freigibt,
bei welchem:
- das Verschlusselement (11) in eine von der ersten Endlage (G) und der zweiten Endlage (O) bewegt wird und
- nach dem Bewegen des Verschlusselements (11) in die eine Endlage (G, O) ein Kompensationszyklus (R) durchgeführt wird,
wobei das Verschlusselement (11) während des Kompensationszyklus (R) zum Ausführen einer ersten Kompensationsbewegung (R1) in Richtung der anderen Endlage (O, G) und zum Ausführen einer zweiten Kompensationsbewegung (R2) in Richtung der einen Endlage (G, O) angesteuert wird.

2. Verfahren nach Anspruch 1,
wobei das Verschlusselement (11) zunächst zum Ausführen der ersten Kompensationsbewegung (R1) und daraufhin zum Ausführen der zweiten Kompensationsbewegung (R2) angesteuert wird; oder umgekehrt.

3. Verfahren nach Anspruch 1 oder 2,
wobei das Verschlusselement (11) zum Ausführen der ersten Kompensationsbewegung (R1) um eine erste Wegstrecke (W1) und zum Ausführen der zweiten Kompensationsbewegung (R2) um eine zweite Wegstrecke (W2) angesteuert wird,
wobei die zweite Wegstrecke (W2) größer ist als die erste Wegstrecke (W1); und/oder wobei das Verschlusselement (11) schrittweise bewegbar ist und wobei das Verschlusselement (11) zum Ausführen der ersten Kompensationsbewegung (R1) um eine erste Anzahl von Schritten (S1) und zum Ausführen der zweiten Kompensationsbewegung (R2) um eine zweite Anzahl von Schritten (S2) angesteuert wird,
wobei die zweite Anzahl von Schritten (S2) größer ist als die erste Anzahl von Schritten (S1).

4. Verfahren nach einem der vorhergehenden Ansprüche,
wobei die angesteuerte erste Kompensationsbewegung (R1) durch eine elastische Verformung eines elastisch verformbaren Kompensationselements (87) kompensiert wird, welches in einem Kraftübertragungspfad von einem Gehäuse (59) des Ventils (13) oder des Ejektors (15) zu dem Verschlusselement (11) angeordnet ist.

5. Verfahren nach einem der vorhergehenden Ansprüche,
wobei der Kompensationszyklus (R) nach einer vorgegebenen oder vorgebbaren Wartezeit (ΔT) nach dem Erreichen der einen Endlage (G, O) durchgeführt wird.

6. Verfahren nach einem der vorhergehenden Ansprüche,
wobei das Verschlusselement (11) in die erste Endlage (G) bewegt wird und wobei der Kompensationszyklus (R) nach dem Bewegen des Verschlusselements (11) in die erste Endlage (G) durchgeführt wird.

7. Verfahren nach Anspruch 6,
wobei der Durchfluss des Fluids oder Gases durch die Durchflussöffnung (17) durch Positionieren des Verschlusselements (11) innerhalb eines Sperrabschnitts (85) des Ventils (13) oder Ejektors (15) blockierbar ist, welcher durch die erste Endlage (G) und eine gegenüber der ersten Endlage (G) in Richtung der zweiten Endlage (O) versetzte Sperrstellung (B) begrenzt ist,
wobei das Verschlusselement (11) durch das Ausführen der ersten Kompensationsbewegung (R1) in Richtung der zweiten Endlage (O) lediglich innerhalb des Sperrabschnitts (85) bewegt wird.

8. Verfahren nach Anspruch 6 oder 7,
wobei die Durchflussöffnung (17) durch das Bewegen des Verschlusselements (11) in die erste Endlage (G) mit einer ersten Schließkraft (C1) verschlossen wird, wobei die Durchflussöffnung (17) durch das Ausführen der zweiten Kompensationsbewegung (R2) mit einer zweiten Schließkraft (C2) verschlossen wird,
wobei die zweite Schließkraft (C2) geringer ist als die erste Schließkraft (C1).

9. Verfahren nach einem der vorhergehenden Ansprüche,
wobei der Antrieb (23) dazu angesteuert wird, das Verschlusselement (11) bei der zweiten Kompensationsbewegung (R2) mit einer geringeren Kraft als bei dem Bewegen in die eine Endlage (G, O) anzutreiben;
und/oder
wobei die von dem Antrieb (23) bei dem Bewegen in die eine Endlage (G, O) auf das Verschlusselement (11) übertragene Kraft vor einem erwarteten Erreichen der einen Endlage (G, O) reduziert wird;
und/oder
wobei der Antrieb dazu angesteuert wird, das Verschlusselements (11) bei der ersten Kompensationsbewegung (R1) mit einer größeren Kraft als bei der zweiten Kompensationsbewegung (R2) und/oder als bei dem Bewegen in die eine Endlage (G, O) anzutreiben.

10. Verfahren nach einem der vorhergehenden Ansprüche,
wobei der Kompensationszyklus (R) zyklisch wiederholt wird,
wobei eine Zykluszeit (ΔT1) zwischen zwei aufeinanderfolgenden Durchführungen des Kompensationszyklus (R) insbesondere konstant ist oder sukzessive zunimmt.

11. Ventil (13) oder Ejektor (15),
umfassend
- ein zwischen einer ersten Endlage (G) und einer zweiten Endlage (O) bewegbares Verschlusselement (11), welches dazu ausgebildet ist, eine Durchflussöffnung (17) des Ventils (13) oder Ejektors (15) in der ersten Endlage (G) gegen einen Durchfluss von Fluid oder Gas zu blockieren und die Durchflussöffnung (17) in der zweiten Endlage (O) für einen Durchfluss von Fluid oder Gas freizugeben, und
- ein elastisch verformbares Kompensationselement (87),
wobei das elastisch verformbare Kompensationselement (87) in einem Kraftübertragungspfad von einem Gehäuse (59) des Ventils (13) oder Ejektors (15) zu dem Verschlusselement (11) angeordnet ist.

12. Ventil (13) oder Ejektor (15) nach Anspruch 11,
wobei das Verschlusselement (11) über das Kompensationselement (87) in Richtung der ersten Endlage (G) vorgespannt ist; und/oder
wobei das Kompensationselement (87) dazu ausgebildet ist, infolge einer Bewegung des Verschlusselements (11) in die erste Endlage (G) elastisch verformt zu werden; und/oder
wobei das Kompensationselement (87) durch eine auf das Verschlusselement (11) ausgeübte und in Richtung der zweiten Endlage (O) gerichtete Kraft elastisch verformbar ist, wenn das Verschlusselement (11) in der ersten Endlage (G) positioniert ist.

13. Ventil (13) oder Ejektor (15) nach Anspruch 11 oder 12,
ferner umfassend einen Spindeltrieb (101) zum Antreiben des Verschlusselements (15), mit einer zu einer Drehbewegung antreibbaren Spindelmutter (93) oder Spindel (27), welche, insbesondere über ein Lager (95), durch das Kompensationselement (87) an dem Gehäuse (59) abgestützt ist.

14. Ventil- und/oder Ejektorsystem (75),
umfassend:
- zumindest ein Ventil (13) und/oder zumindest einen Ejektor (15),
- ein zwischen einer ersten Endlage (G) und einer zweiten Endlage (O) bewegbares Verschlusselement (11), welches dazu ausgebildet ist, eine Durchflussöffnung (17) des Ventils (13) oder Ejektors (15) in der ersten Endlage (G) gegen einen Durchfluss von Fluid oder Gas zu blockieren und die Durchflussöffnung (17) in der zweiten Endlage (O) für einen Durchfluss von Fluid oder Gas freizugeben;
- einen Antrieb (23) zum Bewegen des Verschlusselements (11); und
- eine Steuereinrichtung (79), welche dazu eingerichtet ist, das Verschlusselement (11) gemäß einem Verfahren nach einem der Ansprüche 1 bis 10 zu positionieren,
wobei das zumindest eine Ventil (13) und/oder der zumindest eine Ejektor (15) insbesondere nach einem der Ansprüche 11 bis 13 ausgebildet sind/ist.

15. Kälteanlage (33), Wärmeanlage (33) oder Kühlmöbel mit einem Ventil- und/oder Ejektorsystem (75) nach Anspruch 14 und/oder mit einem Ventil (13) und/oder einem Ejektor (15) nach einem der Ansprüche 11 bis 13.
